(19) 

Europäisches
Patentamt
European
Patent Office
Office européen
des brevets

(11) **EP 2 317 365 A1**

(12) **EUROPEAN PATENT APPLICATION**
published in accordance with Art. 153(4) EPC

(43) Date of publication:
**04.05.2011 Bulletin 2011/18**

(21) Application number: **09808152.4**

(22) Date of filing: **15.07.2009**

(51) Int Cl.:
*G02B 26/10* (2006.01)   *B81B 3/00* (2006.01)
*B81B 7/02* (2006.01)   *G02B 26/08* (2006.01)

(86) International application number:
**PCT/JP2009/062778**

(87) International publication number:
**WO 2010/021216 (25.02.2010 Gazette 2010/08)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **22.08.2008 JP 2008213866**

(71) Applicant: **Konica Minolta Opto, Inc.
Hachioji-shi, Tokyo 192-8505 (JP)**

(72) Inventor: **MIZUMOTO Kenji
Hino-shi
Tokyo 191-8511 (JP)**

(74) Representative: **Siegert, Georg
Hoffmann - Eitle
Patent- und Rechtsanwälte
Arabellastrasse 4
81925 München (DE)**

(54) **DRIVE DEVICE**

(57)    It is aimed to provide a drive device capable of realizing appropriate rotation of a driven body about a plurality of drive axes by a drive element while preventing the drive device from requiring higher performance and becoming intricate, and thus leading to higher power consumption and higher cost. In order to achieve the above-mentioned object, the drive device includes: a drive element including first and second signal input sections and driving a driven body about first and second drive axes upon drive signals being supplied to the first and second signal input sections; and a signal supply section supplying the first signal input section with a first drive signal for driving the driven body about the first drive axis and supplying the second signal input section with a second drive signal for driving the driven body about the second drive axis.

F I G . 1 5

**Description**

Technical Field

The present invention relates to a drive device.

Background Art

Nowadays, optical scanners that perform scanning while deflecting a ray such as a laser beam are used in various optical apparatuses such as a barcode reader, a laser printer and a display. Conventionally, for example, a polygon mirror that rotates a polygonal column mirror by a motor to perform scanning with a reflected light beam, and a galvanometer mirror that rotatably oscillates a plane mirror by an electromagnetic actuator are known as an optical scanner as described above.

However, in the mechanical structure that is driven by the above-mentioned motor or electromagnetic actuator, structural parts thereof are large in size and costly. This inhibits miniaturization of the device in which an optical scanner is used and also leads to an increase in commodity price. Further, in a case where scanning is two-dimensionally performed with a light beam, generally, one obtained by combining a polygon mirror and a galvanometer mirror that respectively rotate about one axis is used. However, in order to accurately perform two-dimensional scanning with a light beam, for example, it is necessary to accurately position two mirrors so that scanning directions of the respective mirrors are orthogonal to each other, which considerably complicates optical adjustment.

Therefore, for realizing miniaturization of the device, a reduction in commodity price and an improvement in productivity, various scanners (micro-optical scanners) have been developed, in which structural parts such as a mirror and an elastic beam are integrally formed on a semiconductor substrate using the micro-machining technology to which the semiconductor manufacturing technology is applied.

For example, as to the optical scanner (two-dimensional optical scanner) that performs two-dimensional scanning with a light beam, there is proposed the optical scanner including: a mirror section that reflects a light beam; a movable frame that surrounds the mirror section and supports the mirror section through a pair of torsion bars disposed so as to face each other on a line passing through the center of the mirror section; a fixing frame that surrounds the movable frame and supports the movable frame through at least a pair of bendable beams whose one ends are connected to the movable frame in the vicinity of a center axis of the mirror section that is orthogonal to the torsion bars; and actuators that are disposed on surfaces of the respective bendable beams and rotatably oscillate the bendable beams (for example, Patent Document 1). In this optical scanner, the bendable beams provide the movable frame with rotation torque by driving of the actuators, to thereby rotate the mirror section about two axes of the torsion bar and the center axis. Then, a drive signal (superimposed drive signal), which is obtained by superimposing and adding a drive signal (one drive signal) for driving the mirror section about one axis and a drive signal (the other drive signal) for driving the mirror section about the other axis, is generated and then provided to the actuators, whereby the rotation of the mirror section about each axis is controlled appropriately and independently. Note that, in terms of handling a superimposed drive signal having a particular waveform, addition of signals is realized by an electronic circuit (adder circuit) that processes analog signals.

Further, there are proposed various optical scanners in which a similar drive principle is adopted (for example, Patent Documents 2 to 4).

Prior Art Documents

Patent Documents

Patent Document 1: Japanese Patent Application Laid-Open No. 2007-310196
Patent Document 2: Japanese Patent No. 4003552
Patent Document 3: Japanese Patent No. 3518099
Patent Document 4: Japanese Patent No. 3656598

Disclosure of Invention

Problems to be Solved by the Invention

However, the above-mentioned adder circuit of the two-dimensional optical scanner according to the conventional technology has the following problems (I) to (V).

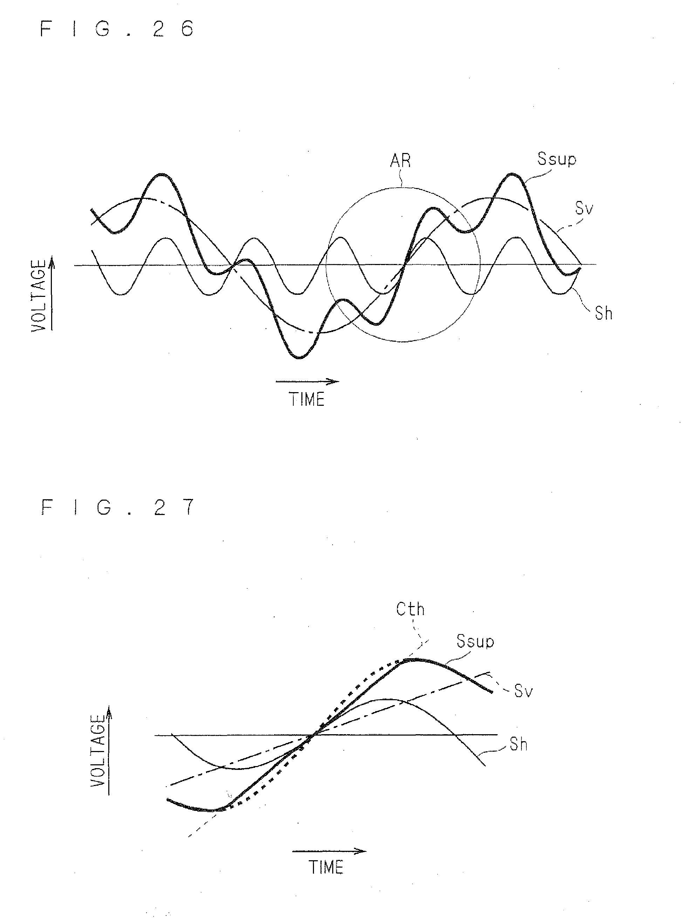

(I) A maximum value of a voltage change amount with respect to a superimposed drive signal per unit time becomes larger than maximum values of voltage change amounts with respect to one and the other drive signals per unit time, due to the superposition of one drive signal and the other drive signal. Here, in a case where a so-called slew rate (which defines the responsiveness with respect to a pulse waveform input of large amplitude and is represented by a change amount (unit: V/µs) of output voltage per unit time) of the adder circuit is lower than the maximum value of the voltage change amount with respect to a superimposed drive signal per unit time, a waveform of a superimposed drive signal output from the adder circuit is distorted. This distortion of the waveform of the superimposed drive signal causes the generation of a distortion in scanning with a ray, and also makes it difficult to control an amplitude and a phase (timing) of desired scanning. FIG. 26 is a figure describing a mode in which a superimposed drive signal is generated by superposition of one drive signal and the other drive signal. In FIG. 26, a waveform of one drive signal is indicated by a thin line Sh, a waveform of the other drive signal is indicated by a chain line Sv, and a waveform of a superimposed drive signal is indicated by a thick line Ssup. FIG. 27 is a figure in which an area circled by a circle AR of FIG. 26 is enlarged. In FIG. 27, a slew rate of the adder circuit is indicated by a straight line Cth that is a thin dashed line, and the waveform of the superimposed drive signal is distorted in a portion where an inclination of a voltage change of a superimposed drive signal becomes larger than an inclination of the straight line Cth. Note that an adder circuit is increased in size and a manufacturing cost thereof rises for increasing the slew rate of the adder circuit.

(II) As shown in FIG. 26 as well, the amplitude of a superimposed drive signal becomes larger than the amplitudes of one drive signal and the other drive signal due to the superposition of one drive signal and the other drive signal. In a case where a maximum value of an output voltage (maximum output voltage) of the adder circuit is lower than a maximum value of the voltage of the superimposed drive signal, the waveform of the superimposed drive signal output from the adder circuit is distorted. This distortion of the waveform of the superimposed drive signal causes the generation of a distortion in scanning with a ray, and also makes it difficult to control the amplitude and phase (timing) of the desired scanning as described above. Although it is conceivable that the ability of a maximum output voltage of an adder circuit may be strengthened for coping with this problem, which requires high power supply voltage, leading to an increase in power consumption.

(III) In a case where there is a large difference between a frequency band of one drive signal and a frequency band of the other drive signal, if frequency characteristics and so-called group delay time characteristics of an adder circuit are insufficient, it is difficult to control the amplitude and phase (timing) in desired scanning for a signal having a higher frequency band. For example, in a case where the frequency of one drive signal is 60 Hz and the frequency of the other drive signal is 30 kHz, the adder circuit can handle a low frequency around 60 Hz to a high frequency around 30 kHz, and one obtained by differentiating a phase angle with respect to an angular velocity needs to be almost constant from a low frequency around 60 Hz to a high frequency around 30 kHz. If even any of the frequency characteristics and group delay time characteristics of the adder circuit are insufficient, a desired waveform cannot be obtained. In order to impart the above-mentioned frequency characteristics and group delay time characteristics to the adder circuit, however, the adder circuit becomes intricate and increases in size.

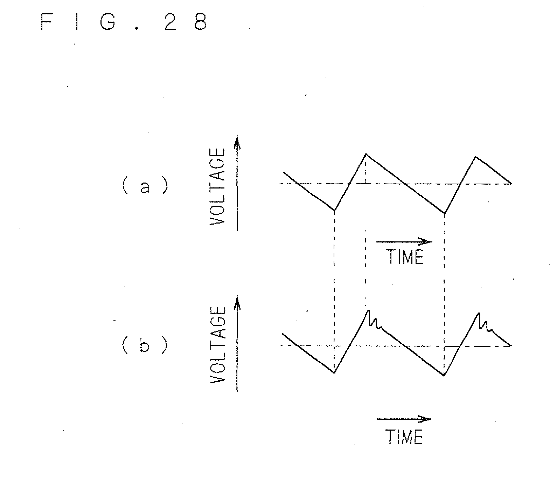

(IV) In a two-dimensional optical scanner in which a piezoelectric element is used for an actuator, in consideration of the problems (I) to (III) above, the configuration of a negative feedback amplifier circuit that has characteristics (wideband frequency characteristics) capable of handling signals of a wideband frequency is normally used for an adder circuit. Generally, it is known that when a capacitive load is connected to an output of a negative feedback amplifier circuit having wideband frequency characteristics, the operation of the negative feedback amplifier circuit becomes unstable, leading to various problems (such as overshoot, ringing and parasitic oscillation in output). In a two-dimensional optical scanner, the electrostatic capacitance between electrodes of the piezoelectric element serves as a load for the adder, and the operation of the adder circuit becomes unstable, which makes scanning in two desired directions difficult. For example, in a case where a signal having a sawtooth-like waveform (FIG. 28(a)) is employed in one drive signal (specifically, drive signal in a vertical direction) and so-called linear driving in which scanning is performed substantially at a constant speed, overshoot or ringing occurs in one drive signal as shown in FIG. 28(b). As a result, noise (for example, horizontal fixed noise) is generated. In order to prevent the generation of such a problem, the adder circuit is required to have characteristics of lower distortion factor.

(V) A two-dimensional optical scanner in which a piezoelectric element is used for an actuator needs to obtain the width for scanning in vertical and horizontal directions to be required. Therefore, for example, a relatively large drive current is required for driving with the use of resonance in scanning in the horizontal direction, whereas a relatively high drive voltage is required for linear driving in scanning in the vertical direction. Accordingly, a high voltage and a resistance to the high voltage are required for an adder circuit that handles a superimposed drive signal, and also a high current and a resistance to the high current are required therefor. This results in an increase of power consumption, as well as increases in size and cost of an adder circuit due to the use of parts for realizing the resistance to high voltage and the resistance to high current.

Because of the problems (I) to (V) described above, an adder circuit is required to have high performance such as wideband frequency characteristics, group delay time characteristics with respect to a wide band, a high slew rate, a low output impedance, a high output voltage and low distortion characteristics. This results in the configuration in which the adder circuit becomes intricate and large in size and thus leads to high power consumption and manufacturing cost.

The present invention has been made in view of the problems described above, and an object thereof is to provide a drive device capable of realizing appropriate rotation of a driven body about a plurality of drive axes by a drive element while preventing the drive device from requiring higher performance and becoming intricate, and thus leading to higher power consumption as well as higher cost.

Means to Solve the Problems

To solve the above-mentioned problems, a drive device according to a first aspect includes: a drive element including first and second signal input sections and driving a driven body about first and second drive axes upon drive signals being supplied to the first and second signal input sections; and a signal supply section supplying the first signal input section with a first drive signal for driving the driven body about the first drive axis and supplying the second signal input section with a second drive signal for driving the driven body about the second drive axis.

According to a second aspect, in the drive device according to the first aspect, the driven body includes a reflection section reflecting a luminous flux emitted from a light source section and performs main scanning with the luminous flux by rotation about the first drive axis and sub scanning with the luminous flux by rotation about the second drive axis.

According to a third aspect, in the drive device according to the second aspect, the rotation of the reflection section in the main scanning is driving with the use of resonance, and the sub scanning includes scanning with the luminous flux substantially at a constant speed.

According to a fourth aspect, in the drive device according to the first aspect, the first drive signal includes a drive signal of a square wave.

According to a fifth aspect, in the drive device according to the fourth aspect, the signal supply section supplies the first drive signal to the first signal input section using a half-bridge circuit.

According to a sixth aspect, in the drive device according to the fifth aspect, the half-bridge circuit includes first and second transistors having different types of carriers. In the drive device, the first transistor has first, second, and third electrodes and is set to, correspondingly to a potential supplied to the third electrode, a conduction state in which a current flows between the first electrode and the second electrode or a non-conduction state in which a current does not flow between the first electrode and the second electrode, and the second transistor has fourth, fifth, and sixth electrodes and is set to, correspondingly to a potential supplied to the sixth electrode, a conduction state in which a current flows between the fourth electrode and the fifth electrode or a non-conduction state in which a current does not flow between the fourth electrode and the fifth electrode. Further, in the drive device, the first electrode is electrically connected to a power supply line applying a power supply voltage, the second electrode and the fourth electrode are electrically connected through a connection part, the third electrode is electrically connected to the sixth electrode, the first signal input section is electrically connected to the connection part, and the connection part outputs a signal of a square wave to the first signal input section upon a signal of a square wave being supplied to a wiring line electrically connecting the third electrode and the sixth electrode.

According to a seventh aspect, in the drive device according to the fourth aspect, the signal supply section supplies the first drive signal to the first signal input section through a reactance element.

According to an eighth aspect, in the drive device according to the seventh aspect, the reactance element includes a capacitor.

According to a ninth aspect, in the drive device according to the first aspect, the drive element includes any one of a piezoelectric element, an electromagnetic element, a magnetostrictive element, an electrostatic element and a polymer element.

Effects of the Invention

According to the drive device of any of the first to ninth aspects, it is possible to omit an adder circuit that superimposes a plurality of drive signals, which increases the degree of freedom in designing a circuit that supplies a drive element with a drive signal. Accordingly, appropriate rotation of a driven body about a plurality of drive axes by a drive element can be realized while preventing the drive device from requiring higher performance and becoming intricate, and thus leading to higher power consumption and higher cost. For example, it is possible to omit an adder circuit that is required to have various kinds of performance such as characteristics relating to a frequency and group delay time adaptable to a wide band, a high slew rate, a low output impedance, a high output voltage and a low distortion characteristic, and thus the size, power consumption and manufacturing cost of a drive circuit for supplying a drive signal to a drive element can be reduced.

According to the drive device of the third aspect, main scanning is the scanning in which resonance is used, and a relatively high current tends to be required, and the drive circuit that supplies a drive signal for main scanning is separate from the drive circuit for sub scanning that is required to have a relatively high voltage. For this reason, owing to a reduction in power supply voltage of the drive circuit that supplies a drive signal for main scanning, power consumption can be reduced by a large amount, and a size as well as a manufacturing cost of the drive circuit can be reduced owing to a dwindling demand for resistance to high voltage. Further, sub scanning is the scanning performed substantially at a constant speed, which tends to require a relatively high voltage, and a drive circuit that supplies a drive signal for sub scanning is separate from the drive circuit for main scanning that is required to have a relatively high current. Accordingly, in the drive circuit for sub scanning, a flowing current becomes smaller compared with an adder circuit, whereby it is possible to reduce power consumption by a large amount, and reduce a size and a manufacturing cost of a drive circuit owing to a dwindling demand for resistance to high current.

According to the drive device of the fourth aspect, resonance driving using a drive signal of a square wave brings about a state in which the voltage of the drive signal is substantially raised and the drive signal is supplied, which reduces power consumption.

According to the drive device of any of the fifth and sixth aspects, the output impedance of the half-bridge circuit is low and the drive signal is supplied to the drive element by a switching operation, which reduces power consumption.

According to the drive device of any of the seventh and eighth aspects, power consumption is reduced.

According to the drive device of the eighth aspect, DC components of, for example, an offset voltage that makes drive control of vertical and horizontal scanning unstable are removed.

According to the drive device of the ninth aspect, for example, an adder circuit including a high-performance negative feedback amplifier circuit is omitted even in a case where a piezoelectric element is used for a drive element, and thus unstable driving of a driven body resulting from a fact that an electrostatic capacity between electrodes of the piezoelectric element serves as a load of the adder circuit including a negative feedback amplifier circuit is prevented. Note that even in a case where a negative feedback amplifier circuit is used for a dedicated drive circuit for individually supplying one drive signal to drive element, the bandwidth and amplitude of the drive signal handled by the drive circuit are more limited compared with the bandwidth and amplitude of the drive signal that is handled in generating a superimposed drive signal by the adder circuit, and thus it is possible to adopt a negative feedback amplifier circuit that handles a drive signal having narrower frequency bandwidth and amplitude. Therefore, it is possible to simplify the configuration of the drive circuit, which facilitates designing of a drive circuit resistant to the effect of a capacitive load.

Brief Description of Drawings

FIG. 1 is a block diagram showing a functional configuration of an image projector according to first to sixth embodiments.

FIG. 2 shows a configuration of a two-dimensional deflecting section.

FIG. 3 is a cross-sectional view seen from a position III-III of FIG. 2.

FIG. 4 is a view for describing the rotation centered on an a-axis of a mirror section.

FIG. 5 is another view for describing the rotation centered on the a-axis of the mirror section.

FIG. 6 is a view for describing the rotation centered on a b-axis of the mirror section.

FIG. 7 is another view for describing the rotation centered on the b-axis of the mirror section.

FIG. 8 is a view describing a mode in which an image is projected onto a screen with an optical scanner.

FIG. 9 is a figure illustrating a drive signal in vertical scanning for realizing raster scanning.

FIG. 10 is another figure illustrating the drive signal in vertical scanning for realizing raster scanning.

FIG. 11 is a figure illustrating a drive signal in horizontal scanning for realizing raster scanning.

FIG. 12 is another figure illustrating the drive signal in horizontal scanning for realizing raster scanning.

FIG. 13 is a figure illustrating a waveform of a drive signal obtained by superimposing vertical and horizontal drive signals.

FIG. 14 illustrates a configuration in which drive voltages are individually applied to both electrodes of a piezoelectric element.

FIG. 15 illustrates a configuration in which drive voltages are individually applied to both electrodes of a piezoelectric element.

FIG. 16 illustrates a configuration in which drive voltages are individually applied to both electrodes of a piezoelectric element.

FIG. 17 illustrates a configuration in which drive voltages are individually applied to both electrodes of a piezoelectric element.

FIG. 18 illustrates a configuration in which drive voltages are individually applied to both electrodes of a piezoelectric element.

FIG. 19 illustrates a configuration in which drive voltages are individually applied to both electrodes of a piezoelectric element by a deflection control circuit according to a second embodiment.

FIG. 20 illustrates a configuration in which drive voltages are individually applied to both ends of a piezoelectric element by a deflection control circuit according to a third embodiment.

FIG. 21 illustrates a configuration of a horizontal drive circuit according to a fourth embodiment.

FIG. 22 illustrates a waveform of a square wave of a horizontal drive signal.

FIG. 23 illustrates a waveform of a square wave of a horizontal drive signal.

FIG. 24 illustrates a configuration of a horizontal drive circuit according to a fifth embodiment.

FIG. 25 illustrates a configuration of a horizontal drive circuit according to a sixth embodiment.

FIG. 26 is a figure for describing a slew rate problem of a superimposed drive signal.

FIG. 27 is another figure for describing a slew rate problem of a superimposed drive signal.

FIG. 28 is a figure for describing an unstable operation in a negative feedback circuit.

Embodiments for Carrying Out the Invention

Embodiments of the present invention will be described below with reference to the drawings.

<first embodiment>

<Outline of image projector>

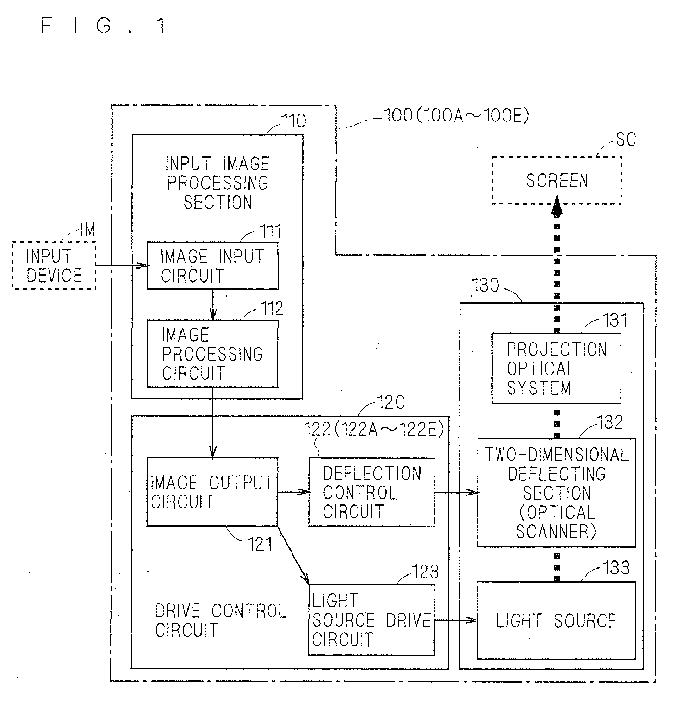

FIG. 1 is a block diagram showing a functional configuration of an image projector 100 according to a first embodiment of the present invention. The image projector 100 is a device that projects a moving image onto a screen SC as a projection surface, and mainly includes an input image processing section 110, a drive control section 120 and an optical mechanism section 130.

The input image processing section 110 includes an image input circuit 111 and an image processing circuit 112. The image input circuit 111 receives an image signal input from an input device IM and outputs it to the image processing circuit 112. The image processing circuit 112 appropriately performs image processing on the image signal from the image input circuit 111 and outputs it to the drive control section 120. Examples of the input device IM include, for example, a personal computer, and examples of the image signal include, for example, a typical NTSC signal. Further, examples of the image processing in the image processing circuit 112 include, for example, correction processing of correcting a distortion or the like of an image and typical $\gamma$ conversion processing.

The drive control section 120 includes an image output circuit 121, a deflection control circuit 122 and a light source drive circuit 123.

The image output circuit 121 outputs a signal (control signal) for controlling the drive timing of a two-dimensional deflecting section 132 (described below) to the deflection control circuit 122 in response to vertical and horizontal synchronization signals of an image signal, and outputs a signal (image data signal) corresponding to a pixel value of an image signal to the light source drive circuit 123.

The deflection control circuit 122 supplies the two-dimensional deflecting section 132 with a drive signal of a potential corresponding to the control signal from the image output circuit 121.

The light source drive circuit 123 performs control so that a light beam having a color and luminance corresponding to the gradation of the image data signal is emitted from a light source 133 (described below) in response to the image data signal from the image output circuit 121. This control timing is determined in accordance with the vertical and horizontal synchronization signals of the image signal. Note that description is given in the present embodiment considering that the drive control section 120 is composed of a dedicated electronic circuit.

The optical mechanism section 130 includes a projection optical system 131, the two-dimensional deflecting section 132 and the light source 133.

The light source 133 includes laser elements that produce laser beams for respective colors and a collimator lens that converts the laser beams emitted from the laser elements to luminous fluxes that are substantially parallel to each other. The laser elements for respective colors produce and emit the laser beams having the luminance corresponding to a pixel value of an image signal, in accordance with the image data signal from the light source drive circuit 123.

The two-dimensional deflecting section 132 includes portions (reflecting sections) that reflect the luminous fluxes emitted from the light source 133, and deflects the luminous fluxes from the light source 133 so as to be reflected in a two-dimensional manner by the reflecting sections respectively rotating about two axes that are substantially orthogonal to each other. Note that in this specification, "deflection in a two-dimensional direction" refers to changing a traveling direction of a luminous flux in a vertical direction and a horizontal direction individually and independently, that is, deflecting a luminous flux in a horizontal direction while deflecting it in a vertical direction. Further, the two-dimensional deflecting section 132 deflects a luminous flux in a two-dimensional direction to cause the luminous flux to perform scan, and accordingly is appropriately referred to as "optical scanner 132" as well.

The projection optical system 131 guides the luminous flux deflected by the optical scanner 132 whose rotation angle has been appropriately changed onto the screen SC being a projection surface, thereby projecting a moving image onto the screen SC. Note that in FIG. 1, an arrow of thick dashed line indicates that a laser beam reaches the screen SC from the light source 133 through the optical scanner 132 and the projection optical system 131.

<Configuration of optical scanner>

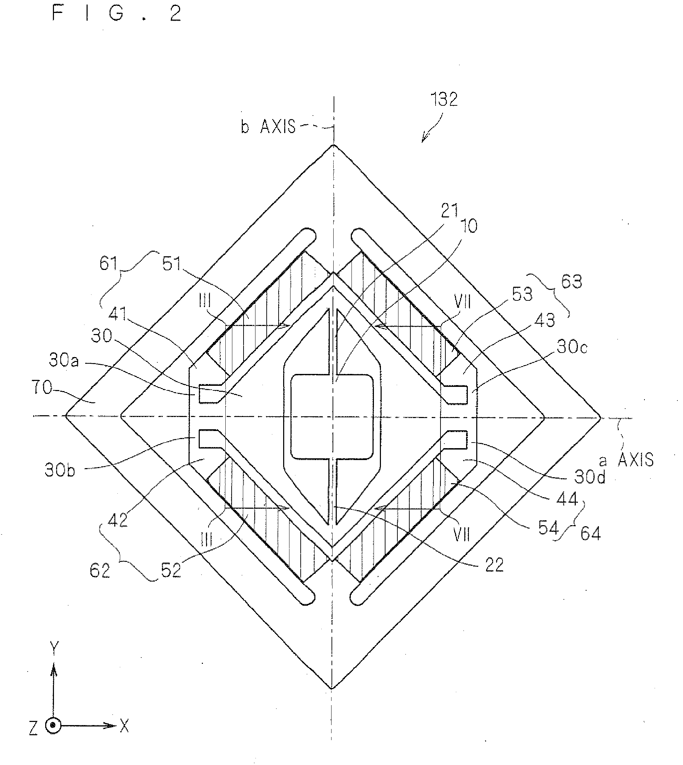

FIG. 2 is a front view illustrating a configuration of the optical scanner 132, and a specific configuration of the optical scanner 132 will be described below with reference to FIG. 2. In FIG. 2 and the following figures, for clarification of the orientation relation, three axes, i.e., XYZ, which are orthogonal to each other are given.

As shown in FIG. 2, the optical scanner 132 mainly includes a fixing frame 70, a movable frame 30 and a mirror section 10. The fixing frame 70 is fixed to a case (not shown) of the image projector 100. The movable frame 30 is formed as a movable portion in a frame shape inside the fixing frame 70. The mirror section 10 is formed inside the movable frame 30, which is a plate-like reflective member whose outer edge is substantially square in shape.

Two torsion bars 21 and 22 are respectively extended from two opposing sides of the mirror section 10 toward outside along a b-axis passing through the center of the mirror section 10. The two torsion bars 21 and 22 are formed so as to be elastically deformable and are connected to the movable frame 30. Accordingly, the mirror section 10 is supported by the movable frame 30 through two torsion bars 21 and 22 so as to be sandwiched from the vertical direction ($\pm$ Y direction).

The movable frame 30 is connected to four bendable beams 41 to 44 respectively by thin connecting sections 30a to 30d in the vicinity of the a-axis passing through the center of the mirror section 10, which is substantially orthogonal to the b-axis. The four bendable beams 41 to 44 are formed so as to be elastically deformable and are connected to the fixing frame 70 at the other ends on the opposite side to one ends connected to the thin connecting sections 30a to 30d. For this reason, the movable frame 30 is supported by the fixing frame 70 so as to be sandwiched from the vertical direction ($\pm$ X direction) through four bendable beams 41 to 44.

Those fixing frame 70, bendable beams 41 to 44, movable frame 30, mirror section 10 and torsion bars 21 and 22 are integrally formed by anisotropic etching of a silicon substrate. Further, a reflective film is formed of a metal thin film of gold, aluminum or the like on a reflective surface of the mirror section 10, which heightens the reflectance of an incident ray.

Bonded to the surfaces of the bendable beams 41 to 44 by adhesion are piezoelectric elements 51 to 54, respectively, which are elements (electromechanical converting elements) that convert electricity to mechanical deformation, whereby four unimorph sections 61 to 64 are formed. When a drive voltage is applied to the piezoelectric elements 51 to 54, the piezoelectric elements 51 to 54 expand and contract, whereby the bendable beams 41 to 44 are bended. Then, rotational torque is provided to the movable frame 30 about the a-axis correspondingly to a degree of bend of the bendable beams 41 to 44, whereby the mirror section 10 rotates about the a-axis, together with the movable frame 30. Further, rotational torque is provided to the movable frame 30 about the b-axis correspondingly to a degree of bend of the bendable beams 41 to 44, whereby the rotation torque is also provided to the mirror section 10 about the b-axis through the torsion bars 21 and 22. Accordingly, the mirror section 10 rotates about the b-axis. That is, in the mirror section 10, oscillatory vibration occurs in two directions about the a-axis and the b-axis.

Here, the mirror section 10 accordingly corresponds to a driven body capable of being driven about a plurality of drive axes (specifically, a-axis and b-axis), and the piezoelectric elements 51 to 54 correspond to drive elements that drive the mirror section 10 about the plurality of drive axes (specifically, a-axis and b-axis). The configuration including the optical scanner 132 and the deflection control circuit 122 forms a drive device that drives the mirror section 10.

<Rotational operation of mirror section>

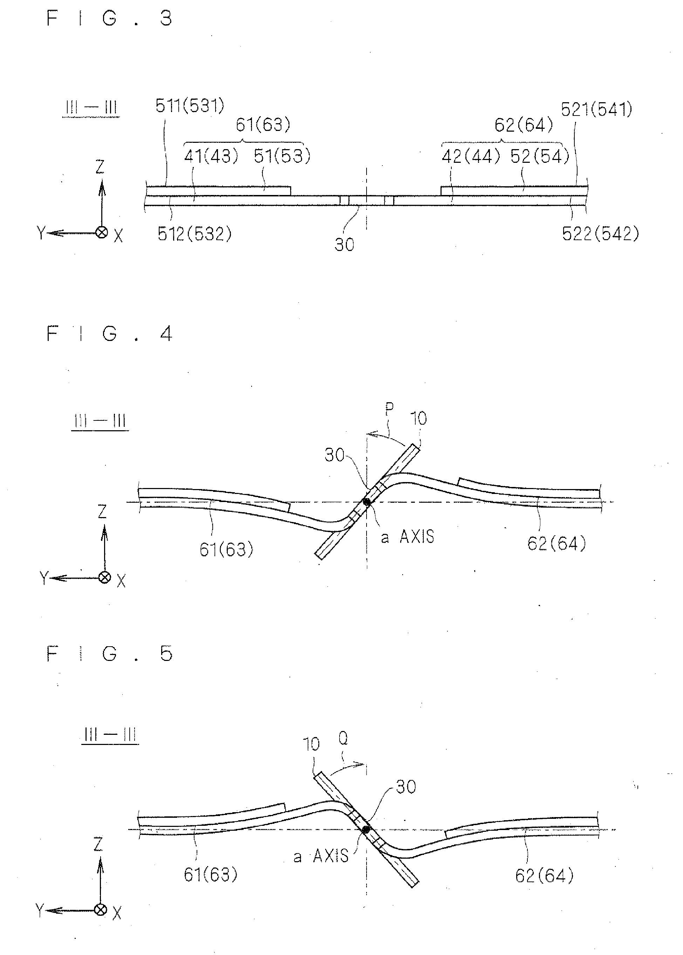

FIG. 3 is a cross-sectional view seen from a position III-III of FIG. 2. As shown in FIG. 3, an upper electrode 511 is provided on a front surface of the piezoelectric element 51 and a lower electrode 512 is provided on a back surface thereof. An upper electrode 521 is provided on a front surface of the piezoelectric element 52 and a lower electrode 522 is provided to a back surface thereof. An upper electrode 531 is provided on a front surface of the piezoelectric element 53 and a lower electrode 532 is provided to a back surface thereof. An upper electrode 541 is provided on a front surface of the piezoelectric element 54 and a lower electrode 542 is provided on a back surface thereof.

For example, when an AC voltage is applied to the upper electrode 511 and the lower electrode 512 to such an extent that so-called polarization inversion does not occur between the upper electrode 511 and the lower electrode 512, the piezoelectric element 51 expands and contracts and is displaced in a thickness direction. In addition, when an AC voltage is applied to the upper electrode 521 and the lower electrode 522 to such an extent that polarization inversion does not occur between the upper electrode 521 and the lower electrode 522, the piezoelectric element 52 expands and contracts and is displaced in a thickness direction. Further, when an AC voltage is applied to the upper electrode 531 and the lower electrode 532 to such an extent that polarization inversion does not occur between the upper electrode 531 and the lower electrode 532, the piezoelectric element 53 expands and contracts and is displaced in a thickness direction. Moreover, when an AC voltage is applied to the upper electrode 541 and the lower electrode 542 to such an extent that polarization inversion does not occur between the upper electrode 541 and the lower electrode 542, the piezoelectric element 54 expands and contracts and is displaced in a thickness direction.

FIG. 4 and FIG. 5 are views for describing the rotation of the mirror section 10 about the a-axis. In FIG. 4 and FIG. 5, bends of the unimorph sections 61 to 64 are schematically shown based on FIG. 3.

Such a voltage that the piezoelectric element 51 expands is applied to the piezoelectric element 51, and the voltage having an opposite phase to the voltage applied to the piezoelectric element 51 is applied to the piezoelectric element 52, whereby the piezoelectric element 51 expands and the piezoelectric element 52 contracts. On this occasion, one ends of the unimorph sections 61 and 62 are fixed to the fixing frame 70, and thus as shown in FIG. 4, the unimorph section 61 is bended downward correspondingly to the expansion of the piezoelectric element 51 with an end portion on the fixing frame 70 side as a fulcrum, and the unimorph section 62 is bended upward correspondingly to contraction of the piezoelectric element 52 with an end portion on the fixing frame 70 side as a fulcrum. On the other hand, when a voltage equal to that of the piezoelectric element 51 is applied to the piezoelectric element 53 and a voltage equal to that of the piezoelectric element 52 is applied to the piezoelectric element 54, the piezoelectric element 53 expands and the piezoelectric element 54 contracts. On this occasion, as shown in FIG. 4, the unimorph section 63 is bended downward with an end portion on the fixing frame 70 side as a fulcrum, and the unimorph section 64 is bended upward with an end portion on the fixing frame 70 side as a fulcrum. Owing to the bend of the unimorph sections 61 to 64 as described above, rotational torque with the a-axis being the center acts on the movable frame 30, and the movable frame 30 tilts in a direction of arrow P about the a-axis.

Further, when the voltages having opposite phases to those described with reference to FIG. 4 are respectively applied to the piezoelectric elements 51 to 54, as shown in FIG. 5, the unimorph sections 61 and 63 are bended upward with the end portions on the fixing frame 70 side as fulcrums, and the unimorph sections 62 and 64 are blended downward with the end portions on the fixing frame 70 side as fulcrums. Accordingly, rotational torque about the a-axis acts on the movable frame 30, and the movable frame 30 tilts in a direction of an arrow Q about the a-axis.

Then, when AC voltages having the same phase are applied to the piezoelectric elements 51 and 53 and the AC voltages having opposite phase to those applied to the piezoelectric elements 51 and 53 are applied to the piezoelectric elements 52 and 54, the unimorph sections 61 and 63 generate oscillations following changes of the voltages such that the end portions on the movable frame 30 side are repeatedly displaced upward and downward. In addition, the unimorph sections 62 and 64 generate, for having opposite phases to those of the unimorph sections 61 and 63, oscillations such that the end portions on the movable frame 30 side are repeatedly displaced upward and downward. On this occasion, rotational torque so as to alternately generate the tilt in the arrow P direction and the tilt in the arrow Q direction acts on the movable frame 30, and the movable frame 30 rotates about the a-axis so as to be repeatedly displaced to a predetermined angle, that is, rotatably oscillates.

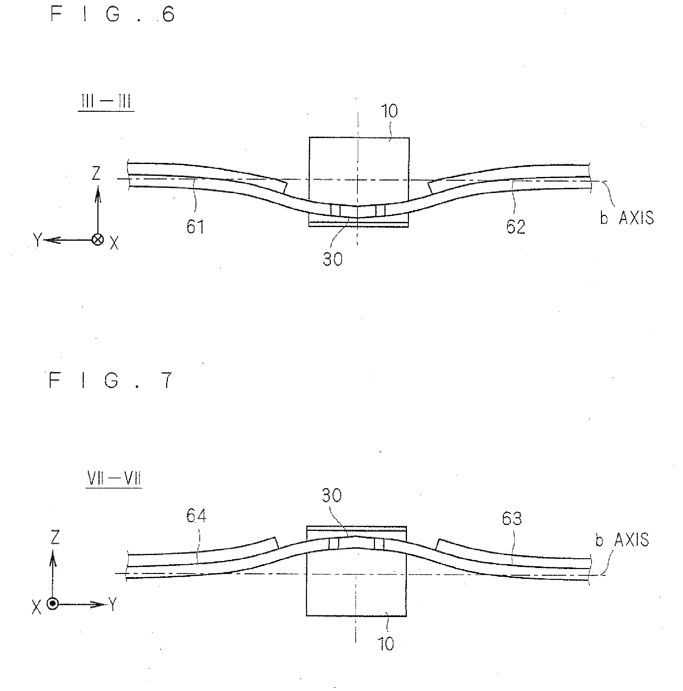

FIG. 6 and FIG. 7 are views for describing the rotation about the b-axis of the mirror section 10. Note that FIG. 6 schematically shows the bend of the unimorph sections 61 and 62 based on FIG. 3, and FIG. 7 schematically shows the bend of the unimorph sections 63 and 64 based on the cross-sectional view seen from a position VII-VII of FIG. 2.

One ends of the unimorph sections 61 and 62 are fixed to the fixing frame 70, and thus when the such voltages that the piezoelectric elements 51 and 52 extend are applied to both of the piezoelectric elements 51 and 52, the unimorph sections 61 and 62 are both bended downward with the end portions on the fixing frame 70 side as fulcrums correspondingly to the extension of the piezoelectric elements 51 and 52, as shown in FIG. 6. On the other hand, one ends of the unimorph sections 63 and 64 are fixed to the fixing frame 70, and thus when the voltages having opposite phases to those applied to the piezoelectric elements 51 and 52 are applied to both of the piezoelectric elements 53 and 54, the unimorph sections 63 and 64 are both bended upward with the end portions on the fixing frame 70 side as fulcrums correspondingly to the contraction of the piezoelectric elements 53 and 54, as shown in FIG. 7. On this occasion, rotational torque about the b-axis acts on the movable frame 30, whereby the movable frame 30 tilts about the b-axis.

Then, when AC voltages having the same phase are applied to the piezoelectric elements 51 and 52 and AC voltages having opposite phases to those applied to the piezoelectric elements 51 and 52 are applied to the piezoelectric elements 53 and 54, the unimorph sections 61 and 62 generate oscillations such that the end portions on the movable section 30 side are repeatedly displaced upward and downward, following a voltage change. Further, the unimorph sections 63 and 64 generate oscillations for having opposite phases to those of the unimorph sections 61 and 62 such that the ends portions on the movable frame 30 are repeatedly displaced upward and downward. On this occasion, such rotation torque as to alternately generate the tilt toward one direction with the b-axis being the center and the tilt toward the opposite direction with the b-axis being the center is employed in the movable frame 30, and the movable frame 30 rotates to be repeatedly displaced to a predetermined angle about the b-axis, that is, rotatably oscillates.

In this manner, when predetermined voltages are respectively applied to four unimorph sections 61 to 64, the mirror section supported by the movable frame 30 is appropriately rotated about the a-axis and the b-axis, and the tilts of the mirror section about the a-axis and the b-axis are appropriately controlled. Then, the bendable beams 41 to 44 are symmetrically disposed by sandwiching the a-axis and the b-axis therebetween, and the piezoelectric elements 51 to 54 provided to the bendable beams 41 to 44 are driven by drive signals having the same phases or the phases opposite by 180 degrees, which enables the movable frame 30 to make independent rotations with the a-axis and the b-axis as two drive axes, without oscillating to one side.

<Image projection by optical scanner>

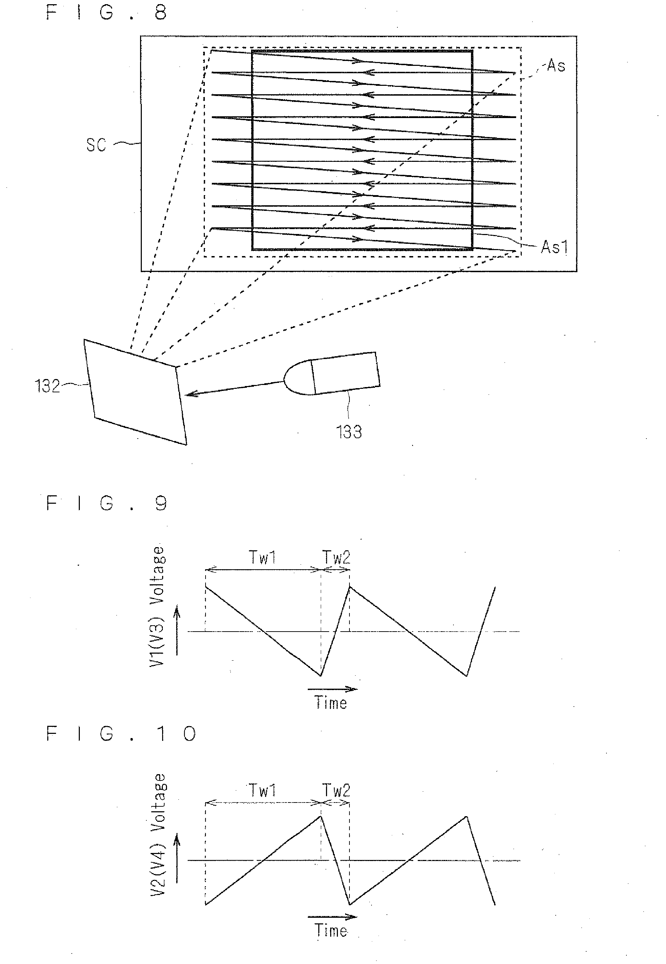

FIG. 8 is a view describing the mode in which an image is projected, by the image projector 100, onto the screen SC with the optical scanner 132.
As shown in FIG. 8, in the image projector 100, rays (rays modulated correspondingly to an image signal) emitted from the light source 133 are deflected in a two-dimensional direction by the optical scanner 132, and the screen SC is scanned with the rays. In this case, so-called raster scanning is performed, and an image is formed on the screen SC. Here, for example, the frequency of scanning (horizontal scanning) in a horizontal direction of the rays is approximately several tens of kHz, and the frequency of scanning (vertical scanning) in a vertical direction of the rays is approximately 60 Hz. In the raster scanning as described above, generally, vertical scanning is referred to as "sub scanning" and horizontal scanning is referred to as "main scanning". The ranges of the rotation angles (deflection angles) in the vertical and horizontal directions of the mirror section 10 respectively change in the range of +10 degrees to -10 degrees.
Incidentally, as to horizontal scanning, the mode in which a change of the deflection angle of the mirror section 10 shows a sine wave is described. For this reason, if scanning is performed with rays with the use of the deflection angles of the optical scanner 132 in the all range, the speed of horizontal scanning (horizontal scanning speed) decreases extremely in the vicinity of the right and left end portions of an area (scanning region) As on the screen SC where scanning is performed with rays. In the area in which the horizontal scanning speed decreases extremely as described above, brightness increases excessively or an image is distorted. Therefore, as shown in FIG. 8, the area (area surrounded by a rectangular thick frame in FIG. 8) slightly inside the scanning area As is used as an area (projection area) As1 in which an image is projected and a projection image is formed.
Description is given of a method of realizing raster scanning by the optical scanner 132 as described above.
As described above, the unimorph sections 61 to 64 are connected to the movable frame 30 by the thin connecting sections 30a to 30d in the vicinity of the a-axis, and thus the movable frame 30 greatly rotates about the a-axis with respect to the displacement of the end portions of the unimorph sections 61 to 64 due to a slight bend. Accordingly, the oscillation of the mirror section 10 about the a-axis described with reference to FIG. 4 and FIG. 5, that is, vertical scanning with rays is realized by the above-mentioned driving method.
On the other hand, the thin connecting sections 30a to 30d are apart from the b-axis, which makes it difficult to rotate the movable frame 30 greatly about the b-axis. Therefore, as to the rotation about the b-axis, the torsion bars 21 and 22 are twisted about the b-axis correspondingly to the rotation of the movable frame 30 about the b-axis, whereby the mirror section 10 oscillates owing to the rotation around a resonance frequency about the b-axis. In this manner, oscillations of the mirror section 10 about the b-axis are excited, whereby the mirror section 10 rotates about the b-axis with large amplitude and an amplitude of horizontal scanning becomes large. In order to realize horizontal scanning as described above, it suffices that the resonance frequency of the mirror section 10 about the b-axis that is based on the length and width of the torsion bars 21 and 22 and the moment of inertia of the mirror section 10 is set in accordance with a desired frequency of horizontal scanning.
Then, drive signals corresponding to the frequencies of the oscillations about the a-axis (vertical scanning frequency) and drive signals corresponding to the frequencies of the oscillations about the b-axis (horizontal scanning frequency) are applied to the respective piezoelectric elements 51 to 54, whereby raster scanning with desired frequency and amplitude is realized.

<Drive signal for raster scanning>

FIG. 9 and FIG. 10 illustrate waveforms of the drive signals in vertical scanning (vertical drive signals) for realizing raster scanning. FIG. 9 shows waveforms of vertical drive signals V1 and V3 supplied to the piezoelectric elements 51 and 53, respectively, and FIG. 10 shows waveforms of vertical drive signals V2 and V4 supplied to the piezoelectric elements 52 and 54, respectively.
The vertical drive signals V1 to V4 are drive signals for causing the mirror section 10 to rotatably oscillate about the a-axis. As shown in FIG. 9, when the vertical drive signals V1 and V3 that have the same phase are supplied to the piezoelectric elements 51 and 53, respectively, and when the vertical drive signals V2 and V4 that have opposite phases to those of the vertical drive signals V1 and V3 are supplied to the piezoelectric elements 52 and 54, as described above, the mirror section 10 rotatably oscillates about the a-axis, and vertical scanning with rays on the screen SC is performed.

In vertical scanning, with reference to FIG. 8, images for one frame are projected during a period in which scanning is performed from the upper portion toward the lower portion of the projection area As1 (vertical scanning period), and after the completion of drawing for one frame, an irradiation area of rays is immediately returned from the lower right portion to the upper left portion of the projection area As. Because of the presence of this period in which the irradiation area of rays is returned from the lower portion to the upper portion (generally, referred to as "vertical blanking period", "return period" or the like), the vertical drive signals V1 to V4 have a sawtooth-like waveform in which a return period Tw2 is relatively shorter than a vertical scanning period Tw1 as shown in FIG. 9.

Here, as to vertical scanning, scanning with rays along the vertical direction from the upper portion to the lower portion of the projection area As1 is performed, during the vertical scanning period Tw1, substantially at a constant speed owing to a change in voltage whose change amount per time is substantially constant. Hereinafter, vertical scanning in which scanning with rays is performed substantially at a constant speed is referred to as "vertical linear driving".

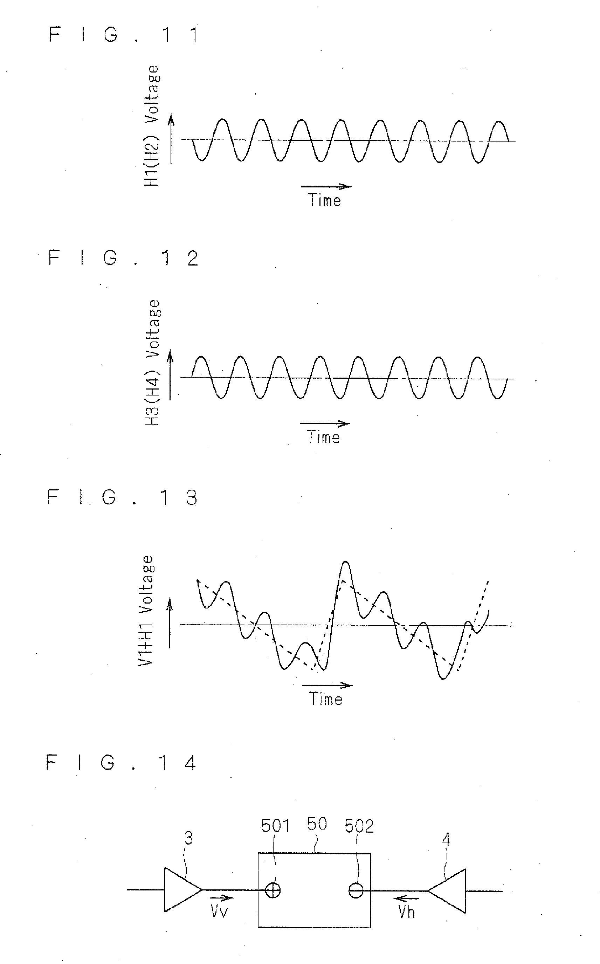

FIG. 11 and FIG. 12 illustrate waveforms of drive signals in horizontal scanning (horizontal drive signals) for realizing raster scanning. FIG. 11 shows the waveforms of horizontal drive signals H1 and H2 supplied to the piezoelectric elements 51 and 52, respectively, and FIG. 12 shows the waveforms of horizontal drive signals H3 and H4 supplied to the piezoelectric elements 53 and 54, respectively.

The horizontal drive signals H1 to H4 are drive signals for causing the mirror section 10 to rotatably oscillate about the b-axis. As shown in FIG. 11, when the horizontal drive signals H1 and H2 that have the same phase are supplied to the piezoelectric elements 51 and 52, respectively, and when the horizontal drive signals H3 and H4 that have the opposite phases to those of the horizontal drive signals H1 and H2 are provided to the piezoelectric elements 53 and 54, as described above, the mirror section 10 rotatably oscillates about the b-axis, and horizontal scanning with rays on the screen SC is performed.

Note that the frequencies of the horizontal drive signals H1 to H4 are set to frequencies around the frequency (resonance frequency) at which the mirror section 10 produces mechanical resonance of rotational oscillation about the b-axis. For this reason, even in a case where the rotational angle of the movable frame 30 about the b-axis is small, it is possible to achieve a large deflection angle by the mirror section 10 when the mirror section 10 is caused to produce resonance around the resonance frequency. Hereinafter, driving of the mirror section 10 in the horizontal direction with the use of resonance is referred to as "horizontal resonance driving".

Description is now given of the method of applying a drive signal (drive voltage) to the respective piezoelectric elements 51 to 54. The description has been given of, by paying attention to vertical scanning and horizontal scanning individually, application to the piezoelectric elements 51 to 54 through distinction between two types of drive signals, the vertical drive signal for realizing vertical linear driving and the horizontal drive signal for realizing horizontal resonance driving. However, conventionally as shown in FIG. 13, the voltage obtained by superimposing a drive signal for vertical scanning and a drive signal for horizontal scanning on each other to be added is generated, and this voltage is applied to the piezoelectric elements 51 to 54, to thereby realize vertical scanning and horizontal scanning. Specifically, when Vv1 to Vv4 represent voltages of the vertical drive signals V1 to V4 (vertical drive voltages) and Vh1 to Vh4 represent voltages of the horizontal drive signals H1 to H4 (horizontal drive voltages), voltages Vp51 to Vp54 applied to the piezoelectric elements 51 to 54 are generated in accordance with Equations (1) to (4) below.

$$Vp51 = Vv1 + Vh1 \cdots (1)$$

$$Vp52 = Vv2 + Vh2 = -Vv1 + Vh1 \cdots (2)$$

$$Vp53 = Vv3 + Vh3 = Vv1 - Vh1 \cdots (3)$$

$$Vp54 = Vv4 + Vh4 = -Vv1 - Vh1 \cdots (4)$$

As described above, in the conventional technology of adding the voltages Vv1 to Vv4 of the vertical drive signals V1 to V4 and the voltages Vh1 to Vh4 of the horizontal drive signals H1 to H4 with the adder circuit so as to be appropriately superimposed on each other, a drawback occurs in which an adder circuit becomes intricate and large in size, requires high power consumption and involves high manufacturing cost due to the above-mentioned problems (I) to (V). Therefore, the inventor(s) of the present invention have found the technology of, through the creativity and improvements, eliminating the aforementioned drawback of the circuit for applying voltages to the piezoelectric elements 51 to 54 and a circuit for applying the voltages. This technology will be described below.

<Method of applying voltage>

The piezoelectric elements 51 to 54 are elements that have two electrodes of the upper electrodes 511, 521, 531 and 541 and the lower electrodes 512, 522, 532 and 542, respectively. Accordingly, it is possible to connect the circuit (power supply) for individually applying different drive voltages to the upper electrodes 511, 521, 531 and 541 as one signal input section and the lower electrodes 512, 522, 532 and 542 as the other signal input section.

FIG. 14 illustrates the configuration in which drive voltages are applied individually to the both electrodes of the piezoelectric element 50. The piezoelectric element 50 has one electrode (positive electrode) 501 and the other electrode (negative electrode) 502, where a drive circuit 3 is connected to the one electrode 501 and a drive circuit 4 is connected to the other electrode 502. Output impedances of the drive circuits 3 and 4 are set to be sufficiently low. The one electrode 501 is applied with the drive voltage Vv by the drive circuit 3, and the other electrode 502 is applied with the drive voltage Vh by the drive circuit 4. On this occasion, a voltage Vp (=Vv-Vh) that corresponds to a difference between the drive voltage Vv and the drive voltage Vh is applied between both ends of the piezoelectric element 50.

This principle is applied to the respective piezoelectric elements 51 to 54.

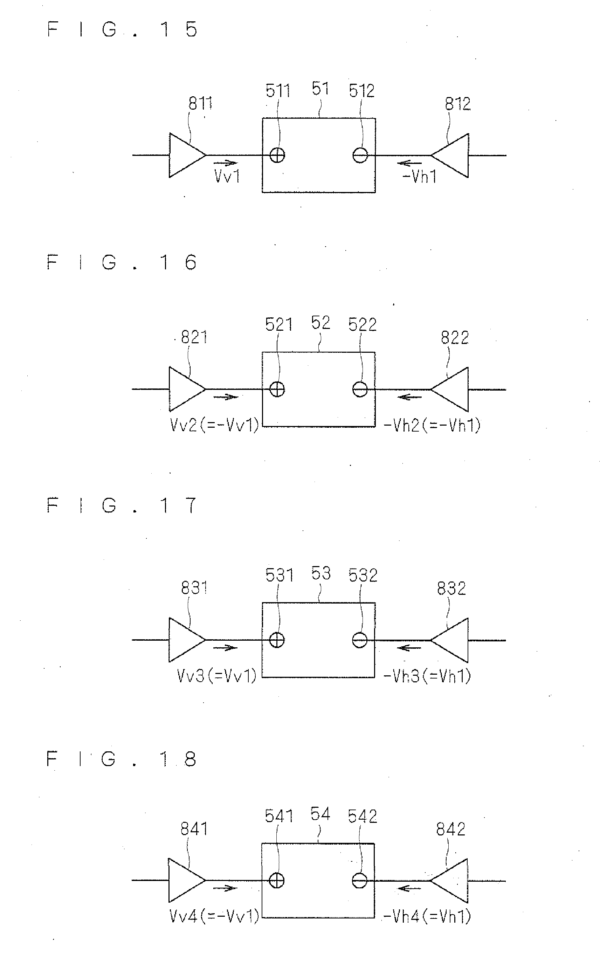

FIG. 15 illustrates the configuration in which drive voltages are applied individually to the both electrodes 511 and 512 of the piezoelectric element 51. In the piezoelectric element 51, a vertical drive circuit 811 is connected to the upper electrode (here, positive electrode) 511, and a horizontal drive circuit 812 is connected to the lower electrode (here, negative electrode) 512. The vertical drive circuit 811 and the horizontal drive circuit 812 are included in the deflection control circuit 122. Here, a vertical drive voltage Vv1 is applied to the upper electrode 511 by the vertical drive circuit 811, and a voltage -Vh1 having the opposite phase to that of the horizontal drive voltage Vh1 is applied to the lower electrode 512 by the horizontal drive circuit 812. On this occasion, a voltage Vp51 applied between the both electrodes 511 and 512 of the piezoelectric element 51 is expressed by Equation (5) below, which coincides with the voltage Vp51 expressed by Equation (1) above.

$$Vp51 = Vv1 - (-Vh1) = Vv1 + Vh1 \cdots (5)$$

FIG. 16 illustrates the configuration in which drive voltages are applied individually to the both electrodes 521 and 522 of the piezoelectric element 52. In the piezoelectric element 52, a vertical drive circuit 821 is connected to the upper electrode (here, positive electrode) 521, and a horizontal drive circuit 822 is connected to the lower electrode (here, negative electrode) 522. The vertical drive circuit 821 and the horizontal drive circuit 822 are included in the deflection control circuit 122. Here, the vertical drive voltage Vv2 (=-Vv1) is applied to the upper electrode 521 by the vertical drive circuit 821, and a voltage -Vh2 (=-Vh1) having the opposite phase to that of the horizontal drive voltage Vh2 is applied to the lower electrode 522 by the horizontal drive circuit 822. On this occasion, a voltage Vp52 applied between the both electrodes 521 and 522 of the piezoelectric element 52 is expressed by Equation (6) below, which coincides with the voltage Vp52 expressed by Equation (2) above.

$$Vp52 = Vv2 - (-Vh2) = -Vv1 - (-Vh1) = -Vv1 + Vh1 \cdots (6)$$

FIG. 17 illustrates the configuration in which drive voltages are applied individually to the both electrodes 531 and 532 of the piezoelectric element 53. In the piezoelectric element 53, a vertical drive circuit 831 is connected to the upper electrode (here, positive electrode) 531, and a horizontal drive circuit 832 is connected to the lower electrode (here, negative electrode) 532. The vertical drive circuit 831 and the horizontal drive circuit 832 are included in the deflection control circuit 122. Here, the vertical drive voltage Vv3 (=Vv1) is applied to the upper electrode 531 by the vertical drive circuit 831, and a voltage -Vh3 (=Vh1) having the opposite phase to that of the horizontal drive voltage Vh3 is applied to the lower electrode 532 by the horizontal drive circuit 832. On this occasion, a voltage Vp53 applied between the both electrodes 531 and 532 of the piezoelectric element 53 is expressed by Equation (7) below, which coincides with the voltage Vp53 expressed by Equation (3) above.
$$Vp53 = Vv3 - (-Vh3) = Vv1 - (Vh1) = Vv1 - Vh1 \cdots (7)$$

FIG. 18 illustrates the configuration in which drive voltages are applied individually to the both electrodes 541 and 542 of the piezoelectric element 54. In the piezoelectric element 54, a vertical drive circuit 841 is connected to the upper electrode (here, positive electrode) 541, and a horizontal drive circuit 842 is connected to the lower electrode (here, negative electrode) 542. The vertical drive circuit 841 and the horizontal drive circuit 842 are included in the deflection control circuit 122. Here, the vertical drive voltage Vv4 (=-Vv1) is applied to the upper electrode 541 by the vertical drive circuit 841, and a voltage -Vh4 (=Vh1) having the opposite phase to that of the horizontal drive voltage Vh4 is applied to the lower electrode 542 by the horizontal drive circuit 842. On this occasion, a voltage Vp54 applied between the both electrodes 541 and 542 of the piezoelectric element 54 is expressed by Equation (8) below, which coincides with the voltage Vp54 expressed by Equation (4) above.
$$Vp54 = Vv4 - (-Vh4) = -Vv1 - Vh1 = -Vv1 - Vh1 \cdots (8)$$

In this manner, the vertical drive circuits 811, 821, 831 and 841 supply the piezoelectric elements 51 to 54 with the vertical drive signals V1 to V4 for driving the mirror section 10 about the a-axis, respectively, and the horizontal drive circuits 812, 822, 832 and 842 supply the piezoelectric elements 51 to 54 with the horizontal drive signals H1 to H4 for driving the mirror section 10 about the b-axis, respectively. With the configurations as shown in FIG. 15 to FIG. 18, it is possible to independently provide the above-mentioned vertical drive signals V1 to V4 and horizontal drive signals H1 to H4 to the both electrodes 511, 512, 521, 522, 531, 532, 541 and 542 of the piezoelectric elements 51 to 54. This enables appropriate and independent control of the above-mentioned horizontal resonance driving and vertical linear driving.

<Characteristics of drive circuit>

Description is now given of characteristics of the vertical drive circuits 811, 821, 831 and 841 and the horizontal drive circuits 812, 822, 832 and 842.

Vertical drive circuits 811, 821, 831 and 841

The vertical drive circuits 811, 821, 831 and 841 output the vertical drive signals V1 to V4 having a repetition frequency of the same waveform of approximately 60 Hz and a sawtooth-like waveform with large voltage amplitude. In order to ensure a constant speed property in vertical scanning, for example, the vertical drive signals V1 to V4 have harmonic components of the frequency band of approximately ten to twenty times (here, approximately 0.6 to 1.2 kHz) the frequency (here, approximately 60 Hz) of the sawtooth-like waveforms of the vertical drive signals V1 to V4. Incidentally, as described above, the adder circuit of the conventional technology is required to have characteristics for a wide frequency band corresponding to both of 60 Hz equivalent to the frequency in vertical scanning and 30 kHz equivalent to the frequency in vertical scanning. In contrast to this, the vertical drive circuits 811, 821, 831 and 841 according to the first embodiment are only required to have characteristics for a relatively narrow frequency band of approximately 60 Hz to 1.2 kHz, which simplifies design of the vertical drive circuits 811, 821, 831 and 841.
Specifically, compared with an adder circuit of the conventional technology, group delay time characteristics can be ensured more easily, and the design (such as the design in which allowance is made for a phase of a negative feedback loop and for a gain) for avoiding an unstable operation (such as overshoot, ringing and parasitic oscillation in output) resulting from the capacitive load (electrostatic capacitance between electrodes of the piezoelectric element) in the negative feedback amplifier circuit is made more easily. Therefore, it is possible to improve characteristics of the control in vertical scanning without making a circuit intricate and increasing a size and a manufacturing cost thereof.
Further, in the vertical drive circuits 811, 821, 831 and 841, it is only required to employ a negative feedback amplifier circuit having a low output impedance, an output with a small distortion, and sufficient output linearity for performing vertical linear driving in which an output impedance is kept sufficiently low and a large voltage amplitude is used. Also in this respect, compared with an adder circuit of the conventional technology, it is only required to provide characteristics for a narrower frequency band. Accordingly, a general-purpose operational amplifier can be used, and design and manufacturing can be made with relative ease. If the performance such as low output impedance, output with a small distortion and sufficient output linearity can be satisfied, it is not required to employ a negative feedback amplifier circuit, and such a configuration is completely free from a problem of capacitive load.

Further, the vertical drive circuits 811, 821, 831 and 841 are circuits separate from the horizontal drive circuits 812, 822, 832 and 842, and hence compared with the case where an adder circuit of the conventional technology is employed, large current is not required though high voltage is required as well. As a result, power consumption can be reduced.

Horizontal drive circuits 812, 822, 832 and 842

The horizontal drive circuits 812, 822, 832 and 842 output the horizontal drive signals H1 to H4 of a sine wave having a repetition frequency of the same waveform of approximately 30 kHz and a relatively small voltage amplitude. For this reason, the horizontal drive circuits 812, 822, 832 and 842 are only required to have characteristics for a narrow frequency band around the resonance frequency (here, 30 kHz). Further, as to the horizontal drive signals H1 to H4 output from the horizontal drive circuits 812, 822, 832 and 842, maximum values of voltage change amount per unit time of the drive signal are smaller compared with the case where the vertical drive signals V1 to V4 and the horizontal drive signals H1 to H4 are superimposed on each other. Accordingly, it suffices that a slew rate of the horizontal drive circuits 812, 822, 832 and 842 is relatively lower than that of an adder circuit of the conventional technology. Note that when a frequency fh in horizontal scanning is 30 kHz and an amplitude Vh of the voltage of the horizontal drive signal is 15 V, a value SR of the slew rate required for the horizontal drive circuits 812, 822, 832 and 842 is determined as expressed by Equation (9) below.
$$SR = 2\pi \times fh \times Vh$$

$$\approx 2 \times 3.14 \times 30 \ [kHz] \times 15 \ [V]$$

$$\approx 2.8 \ [V/\mu sec] \cdots (9)$$

In a case where horizontal resonance driving is performed with the use of the piezoelectric elements 51 to 54, a relatively large current (resonance current) flows through the piezoelectric elements 51 to 54 at the timing synchronized to the resonance frequency, and thus a relatively large current needs to be supplied by the horizontal drive circuits 812, 822, 832 and 842. On the other hand, it suffices that in horizontal resonance driving, horizontal drive signals with a sine wave having a small voltage amplitude are supplied to the piezoelectric elements 51 to 54, and hence the power supply voltage of the horizontal drive circuits 812, 822, 832 and 842 can be low. Further, the horizontal drive circuits 812, 822, 832 and 842 are separate circuits from the vertical drive circuits 811, 821, 831 and 841, and accordingly, compared with the case where an adder circuit of the conventional technology is used, high voltage is not required though large current is required to be supplied in a similar manner. Hence, power consumption can be reduced.

Incidentally, as described above, an adder circuit of the conventional technology is required to have the characteristics for a wide frequency band corresponding to both of 60 Hz equivalent to the frequency in vertical scanning and 30 kHz equivalent to the frequency in horizontal scanning. In contrast to this, it suffices that the horizontal drive circuits 812, 822, 832 and 842 according to the first embodiment have the characteristics for a narrow frequency band around 30 kHz, which is the resonance frequency. For this reason, compared with an adder circuit of the conventional technology, the group delay time characteristics are ensured more easily in the horizontal drive circuits 812, 822, 832 and 842, which facilitates the design (such as the design in which allowance is made for a phase of a negative feedback loop and for a gain) for avoiding unstable operations (such as overshoot, ringing and parasitic oscillation in output) resulting from the capacitive load (electrostatic capacitance between electrodes of the piezoelectric element) in the negative feedback amplifier circuit. Accordingly, it is possible to improve characteristics of the control in horizontal scanning without making the circuit intricate and increasing a size and a manufacturing cost thereof.

Further, the horizontal drive circuits 812, 822, 832 and 842 are required to keep an output impedance sufficiently low, and hence a so-called emitter follower circuit, source follower circuit or negative feedback amplifier circuit may be used. In the circuit as described above, the design so as to satisfy the performance such as desired frequency characteristics, group delay time characteristics, and slew rate is made easily.

As described above, in the image projector 100 according to the first embodiment, it is possible to omit an adder circuit that superimposes a plurality of drive signals on one another, which increases the degree of freedom in designing the circuit that provides vertical and horizontal drive signals to the piezoelectric elements 51 to 54. Therefore, it is possible to realize appropriate rotation of the mirror section 10 about a plurality of drive axes by the piezoelectric elements 51 to 54 while preventing the drive device from requiring higher performance and becoming intricate, and thus leading to higher power consumption and higher cost. For example, it is possible to omit an adder circuit required to have a wide range of performance such as characteristics relating to a frequency and group delay time adaptable to a wide band, a high slew rate, a low output impedance, a high output voltage and low distortion characteristics in output. Accordingly, a size, power consumption and a manufacturing cost of the drive circuits for providing drive signals to the piezoelectric elements 51 to 54 can be reduced.

Further, the vertical drive circuits 811, 821, 831 and 841 that supply the vertical drive signals in sub scanning performed substantially at a constant speed to the piezoelectric elements 51 to 54 are provided separately from the horizontal drive circuits 812, 822, 832 and 842 that supply the horizontal drive signals in main scanning to the piezoelectric elements 51 to 54. For this reason, the power supply voltages of the vertical drive circuits 811, 821, 831 and 841 are reduced, and thus power consumption is reduced by a large amount, and the vertical drive circuits 811, 821, 831 and 841 are less required to be resistant to higher voltage. As a result, sizes and manufacturing costs of the vertical drive circuits 811, 821, 831 and 841 can be reduced. Further, it suffices that the horizontal drive circuits 812, 822, 832 and 842 require smaller voltage than the power supply voltage of an adder circuit of the conventional technology, which reduces power consumption by a large amount.

<Second embodiment>

In the image projector 100 according to the first embodiment, the deflection control circuit 122, which includes the vertical and horizontal drive circuits 811, 812, 821, 822, 831, 832, 841 and 842 connected to the both electrodes of the piezoelectric elements 51 to 54, respectively, is employed. In contrast to this, in an image projector 100A according to a second embodiment, there is employed a deflection control circuit 122A in which the vertical and horizontal drive circuits 811, 812, 821, 822, 831, 832, 841 and 842 are appropriately shared, to thereby achieve miniaturization of a circuit.

Compared with the image projector 100 according to the first embodiment, in the image projector 100A according to the second embodiment, the deflection control circuit 122 is replaced with the deflection control circuit 122A having a configuration different from that of the deflection control circuit 122. Therefore, the image projector 100A according to the second embodiment is described below, where configurations similar to those of the image projector 100 according to the first embodiment are denoted by similar symbols and description thereof is omitted.

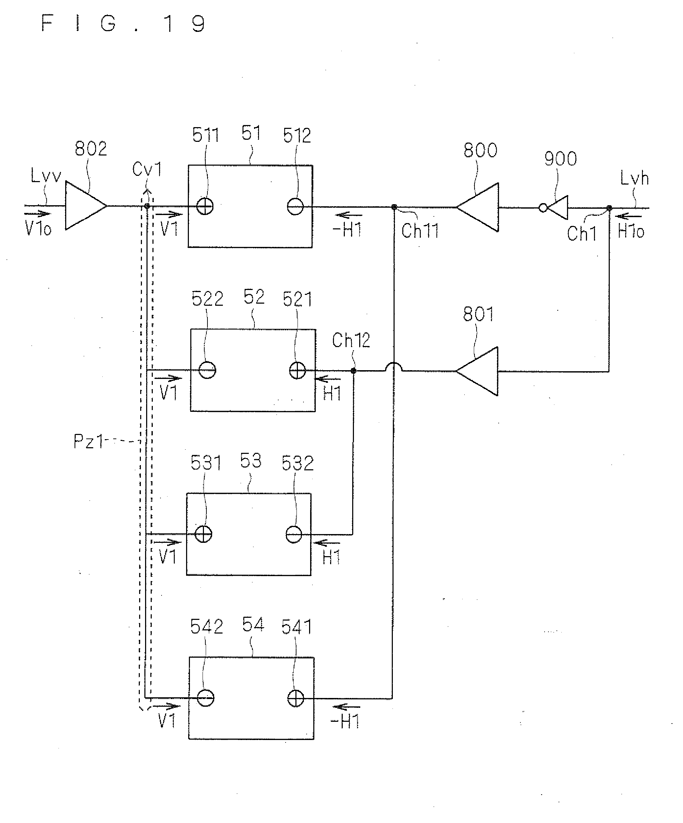

FIG. 19 illustrates the configuration in which vertical and horizontal drive voltages are applied individually to both electrodes of the piezoelectric elements 51 to 54 by the deflection control circuit 122A according to the second embodiment.

As shown in FIG. 19, the deflection control circuit 122A includes horizontal drive circuits 800 and 801, a vertical drive circuit 802, an inverting circuit 900 and voltage supply lines Lvh and Lvv.

Specifically, the voltage supply line Lvh is branched into two wiring lines at a connection part Ch1, where one of the wiring lines is electrically connected to an input side of the inverting circuit 900 and the other wiring line is electrically connected to an input side of the horizontal drive circuit 801. In addition, an output side of the inverting circuits 900 is electrically connected to an input side of the horizontal drive circuit 800. Further, the wiring line electrically connected to an output side of the horizontal drive circuit 800 is branched into two wiring lines at a connection part Ch11, where one of the wiring lines is electrically connected to the lower electrode (negative electrode) 512 of the piezoelectric element 51 and the other wiring line is electrically connected to the upper electrode (positive electrode) 541 of the piezoelectric element 54. Moreover, the wiring line connected to an output side of the horizontal drive circuit 801 is branched into two wiring lines at a connection part Ch12, where one of the wiring lines is electrically connected to the upper electrode (positive electrode) 521 of the piezoelectric element 52 and the other wiring line is electrically connected to the lower electrode (negative electrode) 532 of the piezoelectric element 53.

Further, the voltage supply line Lvv is electrically connected to an input side of the vertical drive circuit 802. A wiring line electrically connected to an output side of the vertical drive circuit 802 is branched into four wiring lines at a connection part Cv1, where the first wiring line is electrically connected to the upper electrode (positive electrode) 511 of the piezoelectric element 51, the second wiring line is electrically connected to the lower electrode (negative electrode) 522 of the piezoelectric element 52, the third wiring line is electrically connected to the upper electrode (positive electrode) 531 of the piezoelectric element 53, and the fourth wiring line is electrically connected to the lower electrode (negative electrode) 542 of the piezoelectric element 54.

Description is now given of the supply of drive signals to the piezoelectric elements 51 to 54.

As to the drive signals in horizontal scanning, first, a drive signal H1o for horizontal driving is input to the inverting circuit 900 and the horizontal drive circuit 801 through the voltage supply line Lvh. On this occasion, a drive signal -h1o obtained by inverting the polarity of the drive signal H1o by the inverting circuit 900 is output and is input to the horizontal drive circuit 800. Then, a horizontal drive signal -H1 obtained by amplifying the amplitude of the drive signal -H1o by the horizontal drive circuit 800 is output and is supplied to the lower electrode 512 of the piezoelectric element 51 and the upper electrode 541 of the piezoelectric element 54. On the other hand, a horizontal drive signal H1 obtained by amplifying the amplitude of the drive signal H1o by the horizontal drive circuit 801 is output and is supplied to the upper electrode 521 of the piezoelectric element 52 and the lower electrode 532 of the piezoelectric element 53. That is, the lower electrode 512 of the piezoelectric element 51 and the upper electrode 541 of the piezoelectric element 54 are applied with the voltage -Vh1 having the phase opposite to that of the horizontal drive voltage Vh1, and the upper electrode 521 of the piezoelectric element 52 and the lower electrode 532 of the piezoelectric element 53 are applied with the horizontal drive voltage Vh1.

On the other hand, as to the drive signals in vertical scanning, first, the drive signal V1o for vertical driving is input to the vertical drive circuit 802 through the voltage supply line Lvv. Then, the vertical drive signal V1 obtained by amplifying the amplitude of the drive signal V1o by the vertical drive circuit 802 is output, and the vertical drive signal V1 is supplied to the upper electrode 511 of the piezoelectric element 51, the lower electrode 522 of the piezoelectric element 52, the upper electrode 531 of the piezoelectric element 53 and the lower electrode 542 of the piezoelectric element 54. That is, the upper electrode 511 of the piezoelectric element 51, the lower electrode 522 of the piezoelectric element 52, the upper electrode 531 of the piezoelectric element 53 and the lower electrode 542 of the piezoelectric element 54 are applied with the vertical drive voltage Vv1.

When the voltages as described above are supplied to both ends of the piezoelectric elements 51 to 54, the voltages Vp51 to Vp54 applied to the piezoelectric elements 51. to 54, respectively, satisfy Equations (1) to (4) above. Note that here, the polarity of the drive signal H1o is inverted by the inverting circuit 900, which is not limited thereto. For example, the inverting circuit 900 may be omitted by causing the horizontal drive circuit 800 to function as a so-called inversion amplifier circuit to incorporate the function of the inverting circuit 900.

As described above, the deflection control circuit 122 according to the first embodiment requires four horizontal drive circuits and four vertical drive circuits, whereas the deflection control circuit 122A according to the second embodiment reduces them to two horizontal drive circuits and one vertical drive circuit. Therefore, in addition to the effects, which has been described in the first embodiment, due to the fact that an adder circuit of the conventional technology is not required, the device can be miniaturized by miniaturization of a circuit and the number of connections can be reduced.

Further, the horizontal drive circuit 801 applies the horizontal drive voltage Vh1 to the piezoelectric elements 52 and 53, and the horizontal drive circuit 800 applies the horizontal drive voltage -Vh1 obtained by inverting the polarity of the horizontal drive voltage Vh1 to the piezoelectric elements 51 and 54. For this reason, a potential of a coupling point Pz1 of the piezoelectric elements 51 to 54, to which the vertical drive voltage Vv1 is applied, is a neutral potential with respect to two horizontal drive voltages Vh1 and -Vh1, that is, the potential of the ground (GND potential) in an alternating manner. Therefore, even if the output impedance of the vertical drive circuit 802 is not remarkably low, a malfunction does not occur in control of vertical and horizontal scanning of the optical scanner 132.

More specifically, if the output impedance of the vertical drive circuit 802 is slightly high and the current flows through the vertical drive circuit 802, such a malfunction occurs that a desired voltage cannot be applied to the piezoelectric elements 51 to 54 by the vertical drive circuit 802 due to a voltage drop. However, here, a relatively large current (horizontal drive current) for horizontal scanning does not flow into the vertical drive circuit 802, and a voltage drop does not occur even when the output impedance of the vertical drive circuit 802 is slightly increased. Therefore, the output impedance of the vertical drive circuit 802 is not strictly required to be reduced in the above-mentioned configuration, which facilitates circuit design of the vertical drive circuit 802.

As a result, further, the group delay time characteristics can be ensured easily, which facilitates the design (such as the design in which allowance is made for a phase of a negative feedback loop and for a gain) for avoiding unstable operations (such as overshoot, ringing and parasitic oscillation in output) resulting from the capacitive load (electrostatic capacitance between electrodes of the piezoelectric element) in the negative feedback amplifier circuit. Accordingly, it is possible to easily improve characteristics of the control in vertical scanning without making the circuit intricate and increasing a size and a manufacturing cost thereof.

Further, as described above, the horizontal drive current does not flow into the vertical drive circuit 802, and thus power consumption in the vertical drive circuit 802 is reduced. For this reason, in the vertical drive circuit 802, the value of the limit of the current allowed to flow (maximum load current) may be small. Here, when Cp represents the electrostatic capacitance between the electrodes of each of the piezoelectric elements 51 to 54, Va represents the amplitude of the voltage having a sawtooth-like waveform of a vertical drive signal, and Tw2 represents the return period of a vertical drive signal, it suffices that a maximum load current Ipmax in the vertical drive circuit 802 satisfies Equation (10) below.

$$Ipmax = Cp \times 2 \times Va/Tw2 \cdots (10)$$

Generally, the electrostatic capacitances of the piezoelectric elements 51 to 54 are set within a range of several nF to several tens of nF. Then, when 10 [nF], 15 [V] and 1.7 [msec] are substituted into Equation (10) above as the electrostatic capacitance Cp, the amplitude Va and the return period Tw2, respectively, the maximum load current Ipmax is calculated to approximately 180 μA (≈ 10 [nF] x 30 [V]/1.7 [msec]). As described above, in the vertical drive circuit 802 according to the present embodiment, the maximum load current Ipmax may be relatively small, approximately 180 μA. Therefore, a circuit configuration whose bias current or the like is small can be adopted as the configuration of the vertical drive circuit 802. Therefore, while the vertical drive circuit 802 is required to have a high power supply voltage for vertical linear driving, power consumption is reduced compared with the vertical drive circuits 811, 821, 831 and 841 according to the first embodiment.

<Third embodiment>

The deflection control circuit 122A of the image projector 100A according to the second embodiment includes two horizontal drive circuits 800 and 801 and one vertical drive circuit 802. In contrast to this, a deflection control circuit 122B of an image projector 100B according to a third embodiment includes one horizontal drive circuit 804 and two vertical drive circuits 805 and 806.

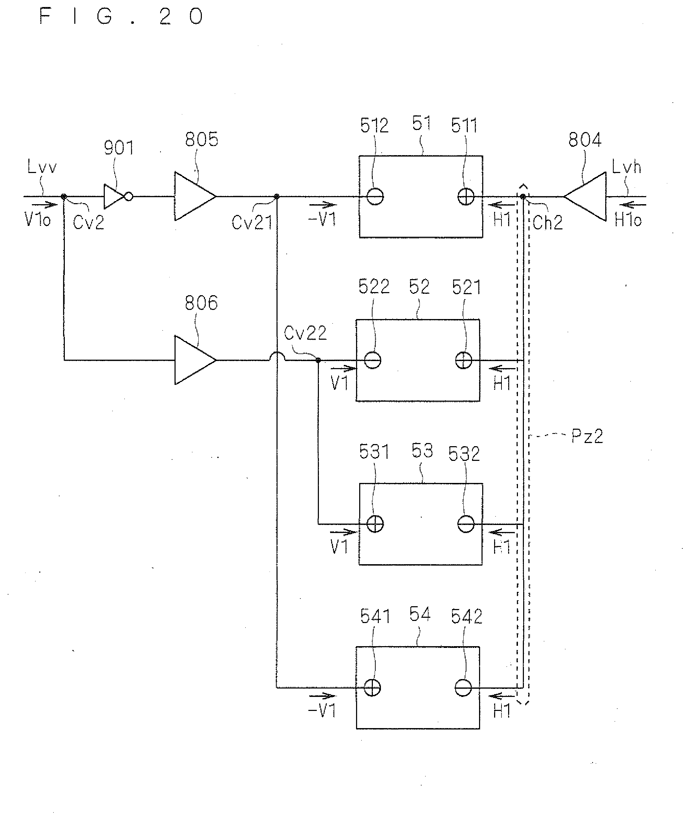

FIG. 20 illustrates the configuration in which drive voltages are applied individually to both electrodes of the piezoelectric elements 51 to 54 by the deflection control circuit 122B according to the third embodiment.

As shown in FIG. 20, the deflection control circuit 122B includes the horizontal drive circuit 804, the vertical drive circuits 805 and 806, an inverting circuit 901 and the voltage supply lines Lvh and Lvv.

Specifically, the voltage supply line Lvh is electrically connected to an input side of the horizontal drive circuit 804. Further, the wiring line electrically connected to an output side of the horizontal drive circuit 804 is branched into four wiring lines at a connection part Ch2, where the first wiring line is electrically connected to the upper electrode (positive electrode) 511 of the piezoelectric element 51, the second wiring line is electrically connected to the upper electrode (positive electrode) 521 of the piezoelectric element 52, the third wiring line is electrically connected to the lower electrode (negative electrode) 532 of the piezoelectric element 53, and the fourth wiring line is electrically connected to the lower electrode (negative electrode) 542 of the piezoelectric element 54.

Further, the voltage supply line Lvv is branched into two wiring lines at the connection part Cv2, where one of the wiring lines is electrically connected to an input side of the inverting circuit 901 and the other wiring line is electrically connected to an input side of the vertical drive circuit 806. In addition, an output side of the inverting circuit 901 is electrically connected to an input side of the vertical drive circuit 805. Further, the wiring line electrically connected to an output side of the vertical drive circuit 805 is branched into two wiring lines at a connection part Cv21, where one of the wiring lines is electrically connected to the lower electrode (negative electrode) 512 of the piezoelectric element 51, and the other wiring line is electrically connected to the upper electrode (positive electrode) 541 of the piezoelectric element 54. Moreover, the wiring line connected to an output side of the vertical drive circuit 806 is branched into two wiring lines at a connection part Cv22, where one of the wiring lines is electrically connected to the lower electrode (negative electrode) 522 of the piezoelectric element 52 and the other wiring line is electrically connected to the upper electrode (positive electrode) 531 of the piezoelectric element 53.

Description is now given of the supply of drive signals to the piezoelectric elements 51 to 54.

As to the drive signals in horizontal scanning, first, the drive signal H1o for horizontal driving is input to the horizontal drive circuit 804 through the voltage supply line Lvh. Then, the horizontal drive signal H1 obtained by amplifying the amplitude of the drive signal H1o by the horizontal drive circuit 804 is output, and the horizontal drive signal H1 is supplied to the upper electrode 511 of the piezoelectric element 51, the upper electrode 521 of the piezoelectric element 52, the lower electrode 532 of the piezoelectric element 53 and the lower electrode 542 of the piezoelectric element 54. That is, the horizontal drive voltage Vh1 is applied to the upper electrode 511 of the piezoelectric element 51, the upper electrode 521 of the piezoelectric element 52, the lower electrode 532 of the piezoelectric element 53 and the lower electrode 542 of the piezoelectric element 54.

On the other hand, as to the drive signals in vertical scanning, first, the drive signal V1o for vertical driving is input to the inverting circuit 901 and the vertical drive circuit 806 through the voltage supply line Lvv. On this occasion, a drive signal -V1o obtained by inverting the polarity of the drive signal V1o by the inverting circuit 901 is output and is input to the vertical drive circuit 805. Then, a vertical drive signal -V1 obtained by amplifying the amplitude of the drive signal -V1o by the vertical drive circuit 805 is output, and is supplied to the lower electrode 512 of the piezoelectric element 51 and the upper electrode 541 of the piezoelectric element 54. On the other hand, the vertical drive signal V1 obtained by amplifying the amplitude of the drive signal V1o by the vertical drive circuit 806 is output and is supplied to the lower electrode 522 of the piezoelectric element 52 and the upper electrode 531 of the piezoelectric element 53. That is, the lower electrode 512 of the piezoelectric element 51 and the upper electrode 541 of the piezoelectric element 54 are applied with a voltage -Vv1 having the phase opposite to that of the vertical drive voltage Vv1, and the lower electrode 522 of the piezoelectric element 52 and the upper electrode 531 of the piezoelectric element 53 are applied with the vertical drive voltage Vv1.

When the voltages as described above are supplied to both ends of the piezoelectric elements 51 to 54, the voltages Vp51 to Vp54 applied to the piezoelectric elements 51 to 54, respectively, satisfy Equations (I) to (4) above. Note that here, the polarity of the drive signal V14o is inverted by the inverting circuit 901, which is not limited thereto. For example, the inverting circuit 901 may be omitted by causing the vertical drive circuit 805 to function as a so-called inversion amplifier circuit to incorporate the function of the inverting circuit 901.

As described above, in the deflection control circuit 122B according to the third embodiment, the number of the horizontal drive circuits is reduced to one and the number of the vertical drive circuits is reduced to two. Therefore, in addition to the effects due to the fact that an adder circuit of the conventional technology described in the first embodiment is not required, the device can be miniaturized by miniaturization of a circuit and the number of connections can be reduced, similarly to the deflection control circuit 122A according to the second embodiment.

Further, the vertical drive circuit 806 applies the vertical drive voltage Vv1 to the piezoelectric elements 52 and 53, and the vertical drive circuit 805 applies the vertical drive voltage -Vv1 obtained by inverting the polarity of the vertical drive voltage Vv1 to the piezoelectric elements 51 and 54. For this reason, a potential of a coupling point Pz2 of the piezoelectric elements 51 to 54, to which the horizontal drive voltage Vh1 is applied, is a neutral potential with respect to two vertical drive voltages Vv1 and -Vv1, that is, the potential of the ground (GND potential) in an alternating manner. Therefore, even if the output impedance of the horizontal drive circuit 804 is not remarkably low, a malfunction does not occur in control of vertical and horizontal scanning of the optical scanner 132. Further, the group delay time characteristics can be ensured easily, which facilitates the design (such as the design in which allowance is made for a phase of a negative feedback loop and for a gain) for avoiding unstable operations (such as overshoot, ringing and parasitic oscillation in output) resulting from the capacitive load (electrostatic capacitance between electrodes of the piezoelectric element) in the negative feedback amplifier circuit. Accordingly, it is possible to easily improve characteristics of the control in horizontal scanning without making the circuit intricate and increasing a size and a manufacturing cost thereof.

<Fourth embodiment>

In the deflection control circuits 122, 122A and 122B of the image projectors 100, 100A and 100B according to the first to third embodiments, horizontal drive signals having a sinusoidal waveform are supplied to the piezoelectric elements 51 to 54. In contrast to this, in a deflection control circuit 122C of an image projector 100C according to a fourth embodiment, horizontal drive signals having a square waveform are applied to the piezoelectric elements 51 to 54.

Description is now given of the reason why the waveform of a horizontal drive signal may be a square wave. The horizontal scanning is realized by horizontal resonance driving of the mirror section 10 with the use of mechanical resonance characteristics of the optical scanner 132. When a square wave having a frequency around the same resonance frequency is employed in place of a sine wave whose repetition frequency having the same waveform is around the resonance frequency of the mirror section 10, the mirror section 10 rotates in response to components of a fundamental wave of a square wave around the resonance frequency, but the mirror section 10 does not rotate in response to components of a harmonic of a square wave. This is because of the function of a bandpass filter for a narrow frequency band as to the mechanical resonance characteristics. Owing to the phenomenon as described above, even if horizontal drive signal of a square wave is supplied to the piezoelectric elements 51 to 54, the mirror section 10 performs horizontal resonance driving as in the case where a horizontal drive signal of a square wave is supplied to the piezoelectric elements 51 to 54.

Description is now given of the configuration of a horizontal drive circuit for supplying a horizontal drive signal of a square wave to the piezoelectric elements 51 to 54. Note that the horizontal drive circuits for the piezoelectric elements 51 to 54 supply signals whose polarity is appropriately inverted, which have a similar configuration. Accordingly, description will be given below by taking the horizontal drive circuit for the piezoelectric element 51 as an example.

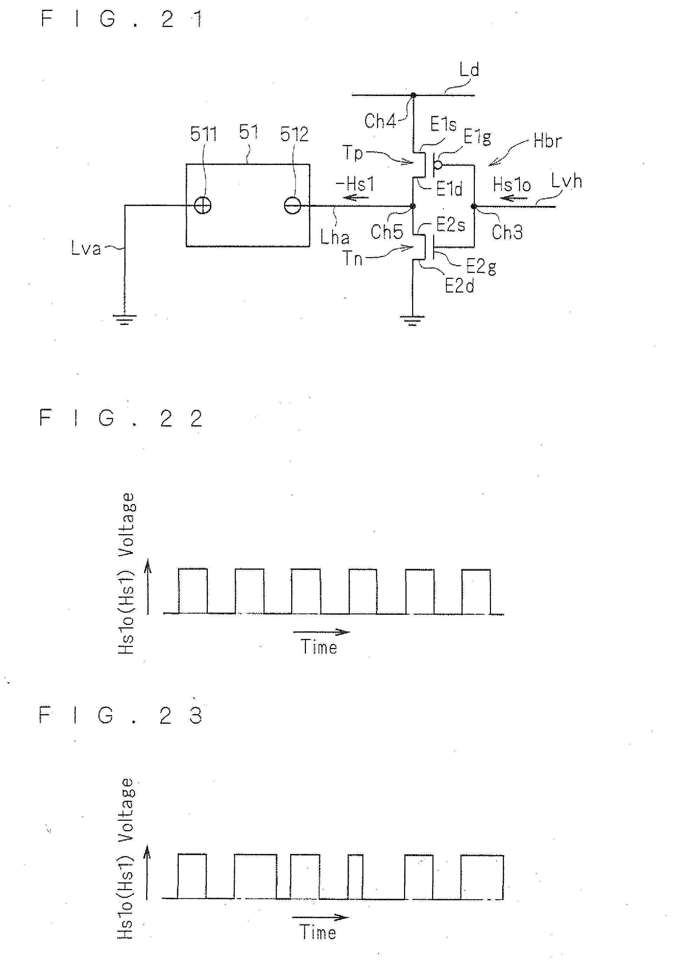

FIG. 21 illustrates the configuration of the horizontal drive circuit for the piezoelectric element 51. Here, the vertical drive circuit electrically connected to the upper electrode (positive electrode) 511 of the piezoelectric element 51 through a wiring line Lva has a relatively low output impedance, and thus it is considered that the upper electrode 511 is grounded in an alternating manner when viewed from the horizontal drive circuit. Therefore, it is shown in FIG. 21 as if the vertical drive circuit side is grounded for simplification of the drawing.

As shown in FIG. 21, the horizontal drive circuit of the deflection control circuit 122C includes a so-called half-bridge circuit Hbr. This half-bridge circuit Hbr includes transistors having carriers different from each other, specifically, a p-channel type field effect transistor (FET) Tp and an n-channel type field effect transistor (FET) Tn.

Here, the p-channel type FET (hereinafter, abbreviated as "p-type transistor") Tp includes a first electrode E1s, a second electrode E1d and a third electrode E1g, and is set to a conduction state in which a current flows between the first electrode E1s and the second electrode E1d or a non-conduction state in which a current does not flow between the first electrode E1s and the second electrode E1d, in accordance with the potential supplied to the third electrode E1g. In addition, the n-channel type FET (hereinafter, abbreviated as "n-type transistor") Tn includes a fourth electrode E2s, a fifth electrode E2d and a sixth electrode E2g, and is set to a conduction state in which a current flows between the fourth electrode E2s and the fifth electrode E2d or a non-conduction state in which a current does not flow between the fourth electrode E2s and the fifth electrode E2d, in accordance with the potential supplied to the sixth electrode E2g.

Here, the first electrode E1s is electrically connected to a power supply line Ld for applying a power supply voltage through a connection part Ch4. In addition, the second electrode E1d is electrically connected to the fourth electrode E2s through a connection part Ch5. Further, the third electrode E1g is electrically connected to the sixth electrode E2g through a connection part Ch3. Further, the fifth electrode E2d is grounded. Moreover, a wiring line Lvh is electrically connected to the connection part Ch3 for supplying a drive signal Hs1o for horizontal driving, and the lower electrode 512 of the piezoelectric element 51 is electrically connected to the connection part Ch5.

Next, description is given of the supply of a drive signal and a potential in a horizontal drive circuit of the deflection control circuit 122C according to the fourth embodiment.

The power supply line Ld is supplied with a predetermined constant voltage (power supply voltage) Vdd. Here, when a horizontal drive signal Hs1o of a square wave as shown in FIG. 22 is supplied to the wiring line Lvh, the drive signal Hslo is supplied to the third electrode E1g and the sixth electrode E2g. In this case, the p-type transistor Tp and the n-type transistor Tn are alternately set to the conduction state and the non-conduction state. That is, the n-type transistor Tn is rendered non-conductive in a case where the p-type transistor Tp is in conduction, and the p-type transistor Tp is rendered non-conductive in a case where the n-type transistor Tn is in conduction. As a result, a horizontal drive signal -Hs1 having a square wave whose polarity is inverse of that of the horizontal drive signal Hslo and having the amplitude equal to that of the power supply voltage Vdd is supplied from the connection part Ch5 to the lower electrode 512.

Here, the operation of short-circuiting the electrodes in response to ON/OFF of a switch is performed in the half-bridge circuit Hbr, and accordingly an output impedance of the half-bridge circuit Hbr is lowered. In the half-bridge circuit Hbr, while power is slightly consumed at the moment of ON/OFF of the switch, power efficiency becomes considerably sufficient, which reduces power consumption. This half-bridge circuit Hbr is one whose circuit size is relatively small.

Further, as to the components of the fundamental wave of the horizontal drive signal -Hs1 having a square wave, that is, the components of the sine wave having a frequency equal to the resonance frequency of the piezoelectric element 51, a difference between a peak value of a positive voltage value and a peak value of a negative voltage value (peak-to-peak value), that is, the amplitude of the voltage value is higher than the power supply voltage Vdd by approximately 20%. Therefore, a slight rise in voltage, that is, a slight voltage rise effect is obtained with the use of the half-bridge circuit Hbr.

Further, as shown in Fig.23, it is possible to perform so-called PWM control in which the amplitude in horizontal scanning of the mirror section 10 is changed when the duty of the horizontal drive signal -Hs1 having a square wave is changed in accordance with a change in duty of the horizontal drive signal Hs1o having a square wave. This PWM control can be used for correcting a distortion of an image in horizontal scanning, which occurs when an image is obliquely projected onto the screen SC from the image projector 100C. Note that "duty" herein represents the ratio of the period in which voltage becomes high to the cycle of the horizontal drive signal Hs1o having a square wave. In a case where the duty is 50%, the amplitude in horizontal scanning is maximized and the amplitude in horizontal scanning becomes smaller as the duty deviates from 50% by a larger amount.

Note that in the configuration using an adder circuit as in the conventional technology, a vertical drive signal and a horizontal drive signal are added to each other, and thus the half-bridge circuit Hbr cannot be used as in the present embodiment.

As described above, in the deflection control circuit 122C according to the fourth embodiment, the voltage of the horizontal drive signal is substantially increased and a drive signal is supplied by horizontal resonance driving of the mirror section 10 with the use of the horizontal drive signals Hs1o and -Hs1 having a square wave, in addition to the effect due to an adder circuit of the conventional technology described in the first embodiment becoming unnecessary. Accordingly, power consumption is reduced. In addition, the output impedance of the half-bridge circuit Hbr is low, and the horizontal drive signal -Hs1 is supplied to the lower electrode 512 of the piezoelectric element 51 by a switching operation. For this reason, a reduction in power consumption is obtained.

<Fifth embodiment>

In the deflection control circuit 122C of the image projector 100C according to the fourth embodiment, the horizontal drive circuit including the half-bridge circuit Hbr is used. In contrast to this, in a deflection control circuit 122D of an image projector 100D according to a fifth embodiment, a reactance element is added to the horizontal drive circuit 122C according to the fourth embodiment.

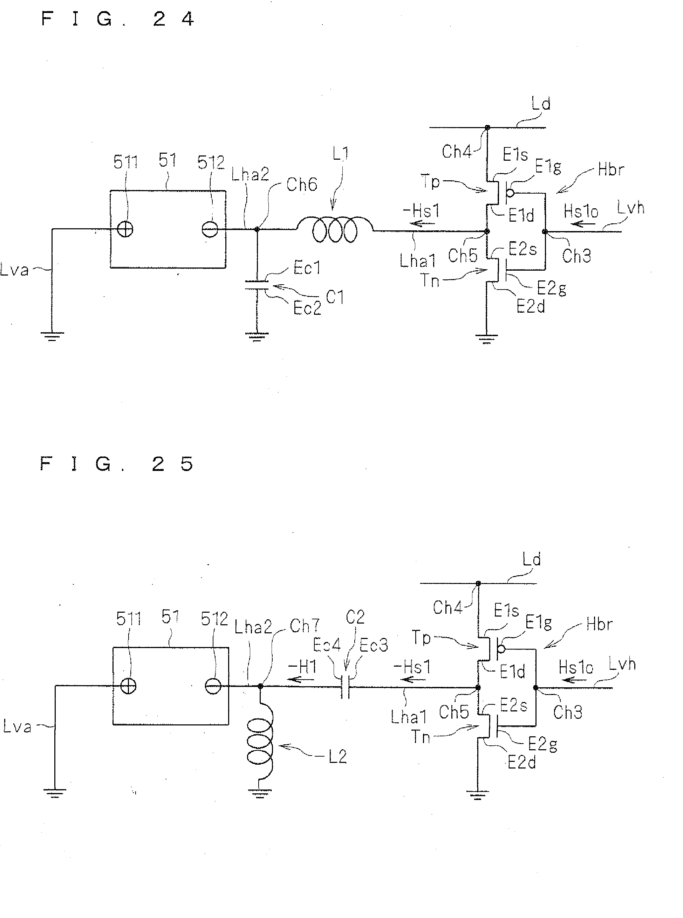

FIG. 24 illustrates the configuration of a horizontal drive circuit of the deflection control circuit 122D according to the fifth embodiment. Note that in the horizontal drive circuits for the piezoelectric elements 51 to 54, while the polarity of a signal to be provided is appropriately inverted, the configurations thereof are similar to each other. Accordingly, description will be given below by taking the horizontal drive circuit for the piezoelectric element 51 as an example. Further, in the horizontal drive circuit of the deflection control circuit 122D according to the fifth embodiment, a circuit including a reactance element is added between the connection part Ch5 of the half-bridge circuit Hbr of the deflection control circuit 122C according to the fourth embodiment and the lower electrode 512, and thus this added circuit will be described.

As shown in FIG. 24, an inductor L1 is electrically connected between the connection part Ch5 and the connection part Ch6, and the connection part Ch6 is electrically connected to the lower electrode 512. In addition, the connection part Ch6 is electrically connected to the upper electrode 511 through an auxiliary capacitor C1. However, as described above, the upper electrode 511 is considered to be grounded in an alternating manner when viewed from the horizontal drive circuit, and hence it is shown in FIG. 24 as if the auxiliary capacitor C1 is grounded. Note that the auxiliary capacitor C1 includes a seventh electrode Ec1 electrically connected to the connection part Ch6 and an eighth electrode Ec2 that is electrically connected to the upper electrode 511 side and is considered to be grounded in an alternating manner.

Next, the supply of a drive signal and a potential in the horizontal drive circuit of the deflection control circuit 122D according to the fifth embodiment will be described. Here, the horizontal drive signal -Hs1 is output from the half-bridge circuit Hbr to the lower electrode 512 as in the fourth embodiment. However, in the present embodiment, a resonance frequency fo that is determined by an inductance L of the inductor L1 and an electrostatic capacitance Cp51 between the electrodes of the piezoelectric element 51 is set so as to substantially coincide with a frequency fh of horizontal resonance driving. As a result, a large resonance current flows from the connection part Ch5 to the inductor L1, and a horizontal drive signal of a sine wave having a frequency fh that is raised to, for example, approximately five times the power supply voltage Vdd is supplied between the positive and negative electrodes (between the upper electrode 511 and the lower electrode 512) of the piezoelectric element 51. That is, a horizontal drive signal of a square wave is converted into a horizontal drive signal of a sine wave because of the presence of the inductor L1. Note that the resonance frequency fo is expressed by Equation (11) below.

$$\text{fo} = 1/\{2\pi \times \sqrt{(L \times Cp51)}\} \approx \text{fh} \cdots (11)$$

Note that in the horizontal drive circuit according to the fourth embodiment, the horizontal drive signal -Hs1 supplied to the lower electrode 512 has a signal waveform of a square wave, and hence power consumption occurs depending on charging/discharging of the electrostatic capacitance Cp51 between both electrodes of the piezoelectric element 51. As a result, power efficiency is deteriorated slightly. In contrast to this, in the horizontal drive circuit according to the fifth embodiment, the state is such that a horizontal drive signal of a sine wave is supplied to the lower electrode 512. As to a signal of this sine wave, the voltage phases are deviated from each other by 90 degrees between the inductor L1 and the capacitor of the piezoelectric element 51, and hence power consumption depending the above-mentioned charging/discharging does not occur. As a result, power efficiency is improved more compared with the fourth embodiment.

Further, the vertical drive circuit that generates a signal of a frequency of 60 Hz to 1.2 kHz is grounded through the piezoelectric element 51 and the inductor L1. For this reason, the current flowing through the vertical drive circuit reduces when the reactance of the inductor L1 with respect to the signal having the frequency of vertical scanning is sufficiently low, which reduces power consumption.

Here, when Co represents the electrostatic capacitance of the auxiliary capacitor C1, the resonance frequency fo is expressed by Equation (12) below.

$$\text{fo} = 1/[2\pi \times \sqrt{\{L \times (Cp51 + Co)\}}] \approx \text{fh} \cdots (12)$$

As can be seen from Equation (12) above, the degree of freedom of the inductance L is increased by appropriately setting the electrostatic capacitance Co. This makes it possible to appropriately adjust the amplitude of the horizontal drive signal supplied to the lower electrode 512 while keeping the power supply voltage Vdd constant. Further, it is possible to compensate the phenomenon that the resonance frequency fo changes in accordance with an ambient temperature by the electrostatic capacitance Co.

Further, also in the present embodiment, it is possible to perform so-called PWM control in which the amplitude of horizontal scanning of the mirror section 10 is changed when the duty of the horizontal drive signal -Hs1 having a square wave is changed in accordance with a change in duty of the horizontal drive signal Hs1o having a square wave as shown in FIG. 23, as in the fourth embodiment.

As described above, in the deflection control circuit 122D according to the fifth embodiment, a driving signal having a sine wave whose amplitude is amplified is supplied to the piezoelectric elements 51 to 54 when the horizontal drive signal having a square wave is supplied to the piezoelectric elements 51 to 54 through the reactance element, in addition to an effect due to a fact that the adder circuit of the conventional technology described in the first embodiment is not required. Accordingly, a reduction in power consumption is achieved. While the description has been given of the present embodiment by showing the configuration in which the auxiliary capacitor C1 is provided, the auxiliary capacitor C1 is not necessarily required if attention is not paid to the enhancement of the degree of freedom in inductance L.

<Sixth embodiment>

A deflection control circuit 122E of an image projector 100E according to a sixth embodiment is obtained by changing the arrangement of the inductor L1 and the arrangement of the auxiliary capacitor C1 and replacing those with an inductor L2 and an auxiliary capacitor C2 in the horizontal drive circuit according to the fifth embodiment.

FIG. 25 illustrates the configuration of a horizontal drive circuit of the deflection control circuit 122E according to the sixth embodiment. While the polarity of the signals to be provided is appropriately reversed in the respective horizontal drive circuits of the piezoelectric elements 51 to 54, the horizontal drive circuits have a similar configuration. Therefore, the portion different from the horizontal drive circuit of the deflection control circuit 122D according to the fifth embodiment will be described by taking the horizontal drive circuit for the piezoelectric element 51 as an example.

As shown in FIG. 25, the auxiliary capacitor C2 is electrically connected between the connection part Ch5 and a connection part Ch7, and the connection part C7 is electrically connected to the lower electrode 512. In addition, the connection part Ch7 is electrically connected to the upper electrode 511 through the inductor L2. As described, however, the upper electrode 511 is considered to be grounded in an alternating manner, and thus it is shown in FIG. 25 as if the inductor L2 is grounded. Note that the auxiliary capacitor C2 has a ninth electrode Ec3 electrically connected to the connection part Ch5 and a tenth electrode Ec4 electrically connected to the connection part Ch7.

Here, a vertical drive circuit that generates a signal having a frequency of 60 Hz to 1.2 kHz is grounded through the piezoelectric element 51 and the inductor L2. For this reason, the current flowing through the vertical drive circuit reduces in the case where the reactance of the inductor L2 to the signal having a frequency in vertical scanning is sufficiently small, which reduces power consumption.

Further, the auxiliary capacitor C2 cuts the DC components including a low frequency component and the like of the horizontal drive signal -Hs1 output from the half-bridge circuit Hbr toward the lower electrode 512. Accordingly, the DC components of, for example, the offset voltage that make driving control of vertical and horizontal scanning unstable are removed. Note that particularly in the case of performing PWM control, the horizontal drive signal -Hs1 tends to include DC components and low frequency components, and hence it is effective to cut the DC components and low frequency components by the auxiliary capacitor C2.

Note that the effect described in the first embodiment that is obtained due to a fact that an adder circuit of the conventional technology is not required is also achieved by the deflection control circuit 122E according to the sixth embodiment.

<modifications>

The present invention is not limited to the above-described embodiments but numerous modifications and variations can be devised without departing from the scope of the invention.

For example, the configuration in which four piezoelectric elements 51 to 54 are provided for rotating one mirror section 10 has been described in the first to sixth embodiments above, but not limited thereto, one piezoelectric element may be provided as the element that drives the mirror section 10.

Further, the first to sixth embodiments above have been described by taking the piezoelectric elements 51 to 54 as examples of the element (drive element) that drives a driven body, but not limited thereto. For example, any one or more of a piezoelectric element, an electromagnetic element, a magnetostrictive element, an electrostatic element and a polymer element may be used as drive elements.

Further, the mirror section 10 rotates about two axes in the first to sixth embodiments above, but not limited thereto. For example, the mirror section 10 may rotate about a plurality of drive axes more than two.

Further, the vertical and horizontal drive signals are all supplied individually to the piezoelectric elements 51 to 54 in the first to sixth embodiments above, but not limited thereto. For example, at least one drive signal among a plurality of vertical and horizontal drive signals for driving the mirror section 10 corresponding to a driven body about a plurality of drive axes may be individually provided to the piezoelectric elements 51 to 54. The above-mentioned configuration increases the degree of freedom in designing a circuit that individually supplies drive signals to the piezoelectric elements 51 to 54. Therefore, it is possible to realize a drive device that realizes appropriate rotation of a driven body about a plurality of drive axes by a drive element while preventing the drive device from requiring higher performance and becoming intricate, and thus leading to higher power consumption and higher cost.

Further, a driven body is the mirror section 10 in the first to sixth embodiments above, but not limited thereto. For example, it may be a driven body that rotates about two axes that are orthogonal or not orthogonal to each other. That is, a drive device that drives various driven bodies is merely required.

Further, the power supply line Ld is electrically connected to the first electrode E1s and the fifth electrode E2d is grounded in the fourth to sixth embodiments above, but not limited thereto. For example, the power supply line Ld may be electrically connected to the fifth electrode E2d and the first electrode E1s may be grounded.

Description of Symbols

10 mirror section
51 to 54 piezoelectric element
100, 100A to 100E image projector
120 drive control section
122, 122A to 122E deflection control circuit
132 two-dimensional deflecting section (optical scanner)
133 light source
511, 521, 531, 541 upper electrode (positive electrode)
512, 522, 532, 542 lower electrode (negative electrode)
800, 801, 804, 811, 821, 831, 841 vertical drive circuit
802, 805, 806, 812, 822, 832, 842 horizontal drive circuit
900, 901 inverting circuit
C 1, C2 auxiliary capacitor
Ch1 to Ch7, Ch11, Ch12, Cv1, Cv2, Cv21, Cv22 connection part
E1d, E1g, E1s, E2d, E2g, E2s, Ec1 to Ec4 electrode
Hbr half-bridge circuit
L1, L2 inductor
Ld power supply line
Lvh, Lvv wiring line
SC screen
Tn n-type transistor
Tp p-type transistor

**Claims**

1.  A drive device, comprising:

    a drive element including first and second signal input sections and driving a driven body about first and second drive axes upon drive signals being supplied to the first and second signal input sections; and
    a signal supply section supplying said first signal input section with a first drive signal for driving said driven body about said first drive axis and supplying said second signal input section with a second drive signal for driving said driven body about said second drive axis.

2.  The drive device according to Claim 1. wherein said driven body includes a reflection section reflecting a luminous flux emitted from a light source section and performs main scanning with said luminous flux by rotation about said first drive axis and sub scanning with said luminous flux by rotation about said second drive axis.

3.  The drive device according to Claim 2, wherein:

    the rotation of said reflection section in said main scanning is driving with the use of resonance; and
    said sub scanning includes scanning with said luminous flux substantially at a constant speed.

4.  The drive device according to Claim 1, wherein said first drive signal includes a drive signal of a square wave.

5. The drive device according to Claim 4, wherein said signal supply section supplies said first drive signal to said first signal input section using a half-bridge circuit.

6. The drive device according to Claim 5, wherein:

said half-bridge circuit includes first and second transistors having different types of carriers;
said first transistor has first, second, and third electrodes and is set to, correspondingly to a potential supplied to said third electrode, a conduction state in which a current flows between said first electrode and said second electrode or a non-conduction state in which a current does not flow between said first electrode and said second electrode;
said second transistor has fourth, fifth, and sixth electrodes and is set to, correspondingly to a potential supplied to said sixth electrode, a conduction state in which a current flows between said fourth electrode and said fifth electrode or a non-conduction state in which a current does not flow between said fourth electrode and said fifth electrode;
said first electrode is electrically connected to a power supply line applying a power supply voltage;
said second electrode and said fourth electrode are electrically connected through a connection part;
said third electrode is electrically connected to said sixth electrode;
said first signal input section is electrically connected to said connection part; and
said connection part outputs a signal of a square wave to said first signal input section upon a signal of a square wave being supplied to a wiring line electrically connecting said third electrode and said sixth electrode.

7. The drive device according to Claim 4, wherein said signal supply section supplies said first drive signal to said first signal input section through a reactance element.

8. The drive device according to Claim 7, wherein said reactance element comprises a capacitor.

9. The drive device according to Claim 1, wherein said drive element includes any one of a piezoelectric element, an electromagnetic element, a magnetostrictive element, an electrostatic element and a polymer element.

F I G . 1

100(100A~100E)

110

INPUT IMAGE
PROCESSING
SECTION

IM

INPUT
DEVICE

111

IMAGE INPUT
CIRCUIT

112

IMAGE
PROCESSING
CIRCUIT

SC

SCREEN

130

131

PROJECTION
OPTICAL
SYSTEM

120

122(122A~122E)

IMAGE OUTPUT
CIRCUIT

DEFLECTION
CONTROL
CIRCUIT

132

TWO-DIMENSIONAL
DEFLECTING
SECTION
(OPTICAL
SCANNER)

121

123

DRIVE CONTROL
CIRCUIT

LIGHT
SOURCE DRIVE
CIRCUIT

133

LIGHT SOURCE

FIG. 2

FIG. 3

FIG. 4

FIG. 5

FIG. 6

III—III

FIG. 7

VII—VII

F I G . 8

F I G . 9

F I G . 1 0

F I G . 1 1

F I G . 1 2

F I G . 1 3

F I G . 1 4

FIG. 15

FIG. 16

FIG. 17

FIG. 18

FIG. 19

F I G . 2 0

FIG. 21

FIG. 22

FIG. 23

F I G . 2 4

F I G . 2 5

FIG. 26

FIG. 27

FIG. 28

(a)

(b)

<div align="center">

**INTERNATIONAL SEARCH REPORT**

</div>

| | International application No. |
|---|---|
| | PCT/JP2009/062778 |

**A. CLASSIFICATION OF SUBJECT MATTER**
G02B26/10(2006.01)i, B81B3/00(2006.01)i, B81B7/02(2006.01)i, G02B26/08
(2006.01)i

According to International Patent Classification (IPC) or to both national classification and IPC

**B. FIELDS SEARCHED**

Minimum documentation searched (classification system followed by classification symbols)
G02B26/10, B81B3/00, B81B7/02, G02B26/08

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2009 |
| Kokai Jitsuyo Shinan Koho | 1971–2009 | Toroku Jitsuyo Shinan Koho | 1994–2009 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2008-129281 A (Seiko Epson Corp.),<br>05 June 2008 (05.06.2008),<br>paragraphs [0070] to [0076]; fig. 1, 2, 5<br>(Family: none) | 1-4,9<br>5-8 |
| Y | JP 2008-60879 A (Kabushiki Kaisha Kaijo<br>Sonikku),<br>13 March 2008 (13.03.2008),<br>paragraphs [0040] to [0045]; fig. 1 to 3<br>(Family: none) | 5-8 |
| Y | JP 2005-210620 A (Nippon Soken, Inc.),<br>04 August 2005 (04.08.2005),<br>paragraphs [0009] to [0018]; fig. 1 to 4<br>(Family: none) | 5-8 |

| ☒ Further documents are listed in the continuation of Box C. | ☐ See patent family annex. |
|---|---|

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 13 October, 2009 (13.10.09) | 20 October, 2009 (20.10.09) |

| Name and mailing address of the ISA/<br>Japanese Patent Office | Authorized officer |
|---|---|
| Facsimile No. | Telephone No. |

Form PCT/ISA/210 (second sheet) (April 2007)

## INTERNATIONAL SEARCH REPORT

International application No.

PCT/JP2009/062778

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 9-5430 A  (Fujitsu Ten Ltd.),<br>10 January 1997 (10.01.1997),<br>paragraph [0003]; fig. 11<br>& US 6154635 A1          & EP 872963 A1<br>& WO 1997/001223 A1      & DE 69635586 T<br>& CN 1188573 A | 6 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007310196 A
- JP 4003552 B
- JP 3518099 B
- JP 3656598 B